# EUROPEAN PATENT APPLICATION

(11) **EP 4 667 350 A2**
(43) Date of publication of application: **24.12.2025**
(21) Application number: 25213064.6
(22) Date of filing: 26.09.2023
(51) Int. Cl.: B63H 25/38

(54) **A FORCE ACTUATION ELEMENT AND A METHOD FOR ADJUSTING AN ELEMENT OF AN AIRCRAFT**

(30) Priority: 27.09.2022 US 202263377333 P; 27.09.2022 US 202263377339 P
(62) Divisional of application: 23782460.2
(71) Applicant: Schoensleben, Sven Patrick, McDonough, GA 30252 (US)
(72) Inventor: SCHOENSLEBEN, Sven Patrick, McDonough, GA, 30252 (US)
(74) Representative: Rutz, Andrea

(57) **Abstract**

A force actuation element (8) for effecting an actuation force is provided, which comprises a first and a second end (81, 82) and a first and a second sheet (83, 84) that each connect the first and the second end (81, 82). The first and the second sheet (83, 84) together enclose an inner space (85) which can be filled with a power transmission fluid (10), such that a change in the amount and/or pressure of fluid in the inner space (85) results in a movement of the first and second ends (81, 82) relative to each other along a force actuation direction (F). The movement of the first and the second ends (81, 82) relative to each other is effected by a pressure of the power transmission fluid (10) on the first and/or the second sheet (83, 84) along a main pressurizing direction (P) that is transverse to the force actuation direction (F). Also provided are an aircraft (1) with such a force actuation element (8) and a method for adjusting an aero- or hydrodynamic element (3, 51, 32, 34, 4, 5, 6).

## Description

### TECHNICAL FIELD

The present invention relates to a force actuation element, which can be used in particular for adjusting an aero- or hydrodynamic element of an aircraft or of a watercraft. Also provided are an aircraft with such a force actuation element and a method for adjusting an aero- or hydrodynamic element.

### PRIOR ART

### Angle of Attack Limiting and Maneuvering Characteristics Augmentation

Much research has been done to prevent upset incidents in aviation. Many electronic ways to achieve this have been developed, both in flight path stable concepts such as in Airbus airplanes and in speed stable concepts such as in Boeing airplanes. The human factor has been thoroughly studied, especially how human pilots react to stress. Flight crew training was improved worldwide after every incident to accommodate the lessons learned; flight simulator hardware and software has been constantly improved to more realistically represent actual airplane behavior, especially near the stall.

The state-of-the-art tailplane arrangement has never been redesigned in decades. Additionally, in all this time any measures to reduce the probability of pitch upsets have focused solely on the control loop (such as stall warning, stick shaker/pusher, electronic maneuvering augmentation/limitation) and improved flight training. For example, in the Boeing 737 MAX, the Maneuvering Characteristics Augmentation System (MCAS) system is used to correct a reduction in nose-down pitch tendency near the stalling angle by introducing an additional nose-down moment, which changes the control input required by a pilot to maintain the pitch attitude. The system is thereby altering the maneuvering characteristics of the airplane.

If not designed robustly enough to be at least fail-safe, such a purely control-loop based design can lead to fatal consequences if it malfunctions.

The McDonnell Douglas/Boeing C-17 Globemaster transporter entered service in 1991 and employs such a system in a sophisticated, fail-safe version; it features six angle-of-attack vanes with a comparison logic and was specifically designed as an angle of attack limiter to avoid a locked-in deep stall situation which the plane was prone to due to its high-wing and T-tail configuration. In [1], Iloputaife described the system in detail; an overall 10⁻⁹ probability for erroneous angle of attack limiting was calculated. Vane-type sensors were identified as being of higher accuracy at high angles of attack than other measurement options. The inherent single point of failure problem of stick pushers, and connected reliability problems were pointed out.

For small airplanes, Chevalier and Faulkner published a system comprising a stall proof device for small general aviation aircraft, along with full-scale wind tunnel testing, in 1980 [2]. As the airplane reached its stalling angle of attack, a small spoiler would deploy on the tailplane's lower surface, just ahead of the elevator hinge, thereby drastically reducing the resulting downforce acting on the tailplane, in effect acting as an upside-down lift dumper. This, in turn, protected the airplane from further pitch-up into the stall. The system performed as expected; however, it still relied on an angle of attack sensor and an actuator for the spoiler, both being points of failure with possibly dangerous consequences (such as an erroneous spoiler deployment at low angle of attack, sending the airplane into a dive).

### Wing Shape Morphing Technologies

With regard to aircraft, the term "morphing" is generally used to describe aircraft elements that are able to change their external shape substantially, in order to e.g. adapt to a changing mission environment during flight. Parker proposed an aeroplane-wing with variable camber back in 1920 [3].

In an extensive overview, Barbarino et al. tabulated many different technologies to achieve wing shape morphing that had been published at the time [4]. It serves as a comprehensive guide to existing technologies, such as eccentuator-based ones, the Flexspar, spanwise-bending HECS-wing, active control of flutter, and actuator requirements, to name a few.

The requirement of actuator locking was pointed out, as otherwise the actuator must withstand the whole load. Gern, Inman and Kapania calculated the actuation power requirements for smart wings with morphing airfoils; their conclusion pointed to the great potential of distributed actuation with regard to system robustness should any failures or damages occur [5]. Dimino et al. similarly studied the benefits of distributed actuation vs. shaft mechanisms from a reliability and failsafe point of view [6].

Jha and Kudva published their own classifications, where they differentiate between robotic and organic design, and investigate the effect of a wing's geometric parameters on airplane performance [7]. Following their definition, in robotic design the area of the wing does not change; either the whole wing or parts thereof are rotated, whereas in organic design wing parameters change to a greater degree. The authors state that, 'while the former leads to variable sweep, variable incidence, and variable dihedral wings, the latter gives rise to leading edge control surface, trailing edge control surfaces, folding tip, and spoiler mechanism. **In** an organic design, the internal mechanism lets the overall size of the wing vary.'

Thus, wing shape morphing is a very extensive field of research.

Out-of-plane morphing generally requires high actuation loads, which conflicts with stiffness requirements. Several concepts have been proposed to solve this, including tendon-actuated cellular trusses [8], [9], [10]. Vos et al. introduced a mechanism for warp-controlled twist of a morphing wing [11]. With an open trailing edge, the wing acts like an open C-profile. A screw displaces the upper and lower leading edges in opposite directions, thereby inducing a twist. This approach places the open part of the wing conveniently at the trailing edge, and effectively solves the problem of actuator locking, since the screw itself acts as a locking device. However, only a linear twist along the span can be achieved.

A variation of the concept above was applied to a helicopter blade by Mistry and Gandhi [12]. The open part and actuation are placed at the lower side rather than the trailing edge. To overcome the tradeoff between torsional stiffness and actuator force, a fixed D-spar nose is maintained. The result is controllable camber morphing along the span.

The Smart Spar similarly makes use of the mechanical properties of a torsion box. Amprikidis and Cooper developed different ways of modifying the wing's shear center. By either rotating a spar, or moving a spar within the wing box, the shear center can be moved, resulting in a changed coupling of bending and torsional behavior. The acting aerodynamic force provides the moment required to twist the wing [13]. This is a case of passive morphing; this type of morphing is particularly applicable to aeroelastic problems; swept wings feature a strong bend-twist coupling and are therefore ideal candidates for aeroelastic tailoring [14].

Close to this concept comes the Variable Cross-Section Spar, where the shear web is moved as required to control the position of the shear center [15]. The authors clearly state that this is in effect an open-section beam and thus, due to reduced torsional stiffness, more prone to flutter and divergence; on the other hand they mention that 'the ability to control the shear center position can be used to suppress flutter and divergence, expanding the flight envelope of the vehicle.' On a more generic level, Cesnik and Brown studied active warping control for a joined-wing airplane configuration [16]. Along with a mechanical description of a deformed wing, they too point out various issues of soft and flexible wings, such as flutter.

Another concept of the same type is the Variable Stiffness Spar, where a rotating spar is incorporated into the wing box [17], [18]. It was applied to an FA-18 model and full wind tunnel testing was performed, and maneuver enhancement demonstrated.

Instead of open beams, Raither used electrothermal and electromechanical effects to alter the shear web properties. This semi-passive approach again makes use of aeroelastic coupling rather than actuators, the absence of which allows for low weight and high efficiency [19].

When it comes to active morphing, actuation forces are one key issue to address. Eccentuator-based actuation is able to produce the required forces and has been employed in a number of cases such as the DARPA Smart Wing Project [20], [21]. With eccentuators, however, actuation forces must be applied continuously as there is no provision for actuator locking.

Piezoelectric elements produce high forces, and have been successfully employed in a number of concepts where high forces and stiffness are required, such as the Flexspar [22].

Molinari used piezoelectric actuators incorporated into the aerodynamic shell in conjunction with an affixed D-spar, compliant ribs and corrugated structures [23]. Roll control by camber morphing and thus a fully maneuverable model airplane was achieved, demonstrating the applicability of such concepts to actual flight control questions. Besides piezoelectric actuators, SMAs are another strong candidate among innovative materials for aircraft morphing [24].

Previtali designed a similar morphing wing based on compliant ribs. His results found that the wing can achieve high levels of roll control authority and has a lower or equivalent weight compared to conventional wings [25]

The high roll authority of such concepts is supported by Pecora et al. [26]. Regarding the effectiveness of 'pure' twist morphing in roll control (i.e. without a fixed D-Spar), they estimated that only slight variations of twist angles are needed to achieve the same effect as ailerons. They investigated linear, quadratic and cubic wing twist, with linear being the most efficient. For satisfactory roll control, a wing deformation of 2.5° to 7.5° is needed, which is considerably less than a standard aileron deflection. Active twist morphing can therefore be a powerful tool to achieve an aerodynamic effect while at the same time minimizing deformations.

Compliant ribs do not necessarily need to contain unbuckled elements only. Gandhi demonstrated the suitability of buckling elements within compliant mechanisms to achieve selective morphing with distributed compliance, for camber morphing of an airfoil with fixed D-spar [27].

The comparatively low strength of compliant mechanisms is a concern when considering them in high-load applications. Bi-stable structures use controlled buckling and are able to withstand higher loads in more than one state, without the need for very high actuation forces. Shape adaptability is thus aided by elastic instabilities. Runkel investigated buckling-induced selective stiffness in chiral structures, successfully including them in an airplane wing rib for passive morphing [28]. Thermally induced active multi-stable structures have been described by Mattioni et al. and were applied to a truss adaptable for sweep with actuation speed not being critical [29]. However, the slow speed at which thermal actuation takes place renders it unsuitable for primary flight control applications.

Pressure-adaptive honeycomb cells have been applied to morphing trailing edge flaps [30]. Other kinds of morphing aim at directly controlling the skin and thus changing the camber locally. Popov et al. proposed a concept for transition flow control by upper skin morphing [31]. The FishBAC concept proposed by Woods et al. consists of a basic bending spline at the airfoil's center, with stringers and flexible skins [32].

Perhaps the single major challenge with any morphing concept remains the skin. Almost always some flexibility of the skins is required. The skin resists any angular deflection of the wing, i.e. with any wing twisting the skin needs to be twisted as well [33]. Many skin designs have been proposed, such as skins with auxetic honeycomb cores, which still require some kind of flexible cover [34], [35], [36], [37]. In order to avoid polymer-based flexible skins, or the need to segment them, corrugated surfaces have been proposed and analyzed [38], [39]. They have been successfully applied to working concepts, such as by Molinari [23].

### Morphing Technology Specific to Large and Heavy Airplanes

Transport category airplanes pose unique challenges to the application of morphing. Most importantly, wing loading in large and heavy airplanes is significantly higher than in small airplanes. Additionally, there are a number of influences such as environmental and operational that may have a restricting impact on the use of some technologies.

The highly multidisciplinary nature and challenge of morphing wing realization is summarized by Vasista et al. [40]. Specific load and deflection requirements along with results are listed that stem from a number of research projects. Issues such as fatigue, and the difference of target morphed shape vs. actual morphed shape due to aerodynamic loading, are highlighted. An average pressure of around 15-19 kPa acting on the wings of large transport category aircraft was estimated, which is up to five times higher than with small general aviation aircraft.

Passive morphing concepts such as presented by Runkel [28] and Raither [19] aim at modifying a wing's response when under loading, and they can sustain high loads. The same holds true for the variable stiffness spar concept, which has been applied to the FA-18 [17], [18].

In a comprehensive review of morphing skins [41], Thill et al. present a list of requirements and possible issues in an operational context. Among others, chemical resistance of skins is mentioned, along with the fact that highly flexible skin concepts frequently incorporate the use of elastomers or rubber. Glass temperatures and required operating temperatures are often vastly different. The issue becomes apparent considering the fact that airliners are usually de-iced using a glycol mixture, and operate in ambient temperatures as low as - 60°C for many consecutive hours.

When it comes to active morphing, so far only limited success has been seen at the level of large and heavy airplanes. Shape morphing has reached a state where it is employed on the trailing edge of NASA's Gulfstream research aircraft, which uses morphing flaps [42]. A commercial application of active morphing in transport category airplanes is Boeing's variable geometry chevron where morphing structures have been successfully integrated in the engine nacelles to achieve noise reduction [43].

Some smaller scale attempts at morphing flight controls for large airplanes include flaps and rudders. Pecora et al. devised a morphing flap for large civil aircraft. Produced fully of aluminum, it features discrete elements and segmented skin, which in effect amounts to building several plain flaps in a row [26].

Amendola et al. devised an adaptive aileron for regional aircraft; it follows a very similar, segmented approach [44]. Their concept too uses aluminum components and involved finger-like ribs. The aileron comprises both an active and a passive segment.

On the leading edge side, Rudenko et al. developed a droop nose concept which involves a multi-link actuation mechanism. The morphing skin is made from GFRP laminate along the span yielding high bending stiffness, embedded in an elastomeric foundation allowing camber morphing [45].

Overall, the Technology Readiness Level of active morphing is still low [31]. As this subsection showed, morphing concepts for transport aircraft remain rather limited and lack radically new designs. Friswell summarized many of these issues in a publication entitled 'Morphing Aircraft: an Improbable Dream?' He noted that, for morphing of large aircraft, the primary research focuses on secondary structures which still have a large effect, such as control surfaces. Actuator requirements and locking remain a concern, as do state-of-the-art flexible skins, currently not being suitable main load carrier members. He further states that 'One drawback with the studies on morphing aircraft is that morphing tends to be added to an existing aircraft that is operated in the same way. This retrofitting approach directly eliminates some major benefits of the morphing technology and constrains any potential for multi-functionality' [46].

Ajaj et al. performed a thorough review of various morphing mechanisms and concepts including elastic skins and morphing winglet flight control; they also studied the potential when retrofitted. Comparing compliance to mechanisms yielded that compliance would not be useful for large and heavy aircraft. Their overall conclusion is summed up in the publication's title 'Morphing aircraft: The need for a new design philosophy' [47].

### Prior Art - References

[1] O. Iloputaife, "Design of Deep Stall Protection for the C-17A," Journal of Guidance, Control and Dynamics, vol. 20, no. 4, p. 760ff, July-August 1997.
[2] H. Chevalier and M. Faulkner, "Full Scale Test of a Stall Proof Device," in AIAA Aircraft Systems Meeting, Anaheim, California, August 4-6, 1980, p1-8.
[3] US 1,341,758.
[4] S. Barbarino, O. Bilgen, R. Ajaj, M. Friswell and D. Inman, "A Review of Morphing Aircraft," Journal of Intelligent Material Systems and Structures, vol. 22, p. 823ff, June 2011.
[5] F. Gern, D. Inman and R. Kapania, "Computation of Actuation Power Requirements for Smart Wings with Morphing Airfoils," AIAA Journal, vol. 43, no. 12, p. 2481ff, December 2005.
[6] I. Dimino, G. Diodati, A. Concilio, A. Volovick and L. Zivan, "Distributed electromechanical actuation system design for a morphing trailing edge wing," in SPIE Smart Structures and Materials + Nondestructive Evaluation and Health Monitoring, Las Vegas, Nevada, 16 April 2016, 980108-1 ff.
[7] A. Jha and J. Kudva, "Morphing aircraft concepts, classifications, and challenges," in Smart Structures and Materials / SPIE, San Diego, California, 29 July 2004, p213ff.
[8] M. Abdulrahim and R. Lind, "Flight Testing and Response Characteristics of a Variable Gull-Wing Morphing Aircraft," in AIAA Guidance, Navigation and Control Conference an Exhibit, Providence, Rhode Island, 16-19 August 2004, p1-16.
[9] L. Wiggins, M. Stubbs, C. Johnston, H. Robertshaw, C. Reinholtz and D. Inman, "A Design and Analysis of a Morphing Hyper-Elliptic Cambered Span (HECS) Wing," in 45th AIAA/ASME/ASCE/AHS/ASC Structures, Struct. Dynamics, and Materials Conference, Palm Springs, California, 19-22 April 2004, AIAA 2004-1885.
[10] D. Ramrakhyani, G. Lesieutre, M. Frecker and S. Bharti, "Aircraft Structural Morphing Using Tendon-Actuated Compliant Cellular Trusses," Journal of Aircraft, vol. 42, no. 6, p. 1615ff, November-December 2005.
[11] R. Vos, Z. Gürdal and M. Abdalla, "Mechanism for Warp-Controlled Twist of a Morphing Wing," Journal of Aircraft, vol. 47, no. 2, p. 450ff, March-April 2010.
[12] M. Mistry and F. Gandhi, "Design, fabrication, and benchtop testing of a helicopter rotor blade section with warp-induced spanwise camber variation," Journal of Intelligent Material Systems and Structures, vol. 26(10), pp. 1272-1289, 2015.
[13] M. Amprikidis and J. Cooper, "Development of Smart Spars for Active Aeroelastic Structures," in 44th AIAA/ASME/ASCE/AHS/ASC Structures, Struct. Dynamics, and Materials Conference, Norfolk, Virginia, 7-10 April 2003, AIAA 2003-1799.
[14] S. Ehlers and T. Weisshaar, "Effect of Adaptive Material Properties on Static Aeroelastic Control," in 33rd Structures, Structural Dynamics and Materials Conference, Dallas, Texas, 13-15 April 1992.
[15] R. Ajaj, M. Bourchak and W. Harasani, "Twist Morphing Using the Variable Cross Section Spar: Feasibility Study," Journal of Aerospace Engineering, American Society of Civ. Engineers, pp. 04014146-1ff, 2015.
[16] C. Cesnik and E. Brown, "Active Warping Control of a Joined-Wing Airplane Configuration," in 44th AIAA/ASME/ASCE/AHS/ASC Structures, Struct. Dynamics, and Materials Conference, Norfolk, Virginia, 7-10 April 2003, AIAA 2003-1715.
[17] P. Chen, D. Sarhaddi, R. Jha, D. Liu, K. Griffin and R. Yurkovich, "Variable Stiffness Spar Approach for Aircraft Maneuver Enhancement using ASTROS," Journal of Aircraft, vol. 37, no. 5, p. 865ff, September-October 2000.
[18] J. Florance, J. Heeg, C. Spain, T. Ivanco and C. Wieseman, "Variable Stiffness Spar Wind-Tunnel Model Development and Testing," in 45th AIAA/ASME/ASCE/AHS/ASC Structures, Struct. Dynamics, and Materials Conference, Palm Springs, California, 19-22 April 2004, AIAA 2004-1588.
[19] W. Raither, E. Furger, M. Zuendel andP. Ermanni, "Variable-stiffness skin concept for camber-morphing airfoils," Journal of Intelligent Material Systems and Structures, London, United Kingdom, 2015.
[20] J. Kudva, "Overview of the DARPA Smart Wing Project," Journal of Intelligent Material Systems and Structures, vol. 15, pp. 261-267, April 2004.
[21] R. Musgrove, "The Eccentuator - a new Concept in Actuation," in NASA Langley Res. Center Proc. of the 14th Aerospace Mech. Symp., Hampton, Virginia, 1980, N80 23501, p. 57ff.
[22] R. Barrett, "Active aeroelastic tailoring of an adaptive Flexspar stabilator," Smart Materials and Structures, IOP Publishing, p. 723ff, 1996.
[23] G. Molinari, A.F. Arrieta, M. Guillaume and P. Ermanni, "Aerostructural Performance of Distributed Compliance Morphing Wings: Wind Tunnel and Flight Testing," AIAA Journal, Vol. 54, No. 12, December 2016.
[24] J. Harrison, S. Wise, R. Bryant, R. Cano and T. Gates, "Innovative materials for aircraft morphing," in 5th Annual Symposium on Smart Structures and Materials (SPIE), San Diego, California, 16 June 1998, 240ff.
[25] F. Previtali, G. Molinari, A.F. Arrieta, M. Guillaume and P. Ermanni, "Design and experimental characterisation of a morphing wing with enhanced corrugated skin," Journal of Intelligent Material Systems and Structures, London, United Kingdom, 2016.
[26] R. Pecora, F. Amoroso and L. Lecce, "Effectiveness of Twist Morphing in Roll Control," Journal of Aircraft, vol. 49, no. 6, p. 1666ff, Nov-Dec 2012.
[27] F. Gandhi and P. Anusonti-Inthra, "Skin design studies for variable camber morphing airfoils," Smart Materials and Structures 17 (2008) 015025 (8pp).
[28] F. Runkel, U. Fasel, G. Molinari, A.F. Arrieta and P. Ermanni, "Wing twisting by elastic instability: A purely passive approach," Composite Structures 206 (2018) 750-761.
[29] F. Mattioni, Weaver, P. K. P.M. and M. Friswell, "The application of thermally induced multistable composites to morphing aircraft structures," in SPIE Smart Structures and Materials + Nondestructive Evaluation and Health Monitoring, San Diego, California, 1 April 2008, 693012-1 ff.
[30] R. Vos and R. Barrett, "Mechanics of pressure-adaptive honeycomb and its application to wing morphing," Smart Materials and Structures, pp. 1-11, 2011, 20 094010.
[31] A. Popov, T. Grigorie and R. Botez, "Modeling and Testing of a Morphing Wing in Open-Loop Architecture," Journal of Aircraft, vol. 47, no. 3, p. 917ff, May-June 2010.
[32] B. Woods, M. Friswell and N. Wereley, "Advanced Kinematic Tailoring for Morphing Aircraft Actuation," AIAA Journal, vol. 52, no. 4, p. 788ff, April 2014.
[33] M. Detrick and G. Washington, "Modeling and Design of a Morphing Wing for Micro Unmanned Aerial Vehicles via Active Twist," in 48th AIAA/ASME/ASCE/AHS/ASC Structures, Struct. Dynamics, and Materials Conference, Honolulu, Hawaii, 23-26 April 2007, AIAA 2007-1788.
[34] A. Dale, J. Cooper and A. Mosquera, "Adaptive Camber-Morphing Wing using 0ν Honeycomb," in 54th AIAA/ASME/ASCE/AHS/ASC Structures, Struct. Dynamics, and Materials Conference, Boston, Massachusetts, April 8-11, 2013, 10.2514/6.2013-1510.
[35] K. Olympio and F. Gandhi, "Flexible Skins for Morphing Aircraft Using Cellular Honeycomb Cores," Journal of Intelligent Material Systems and Structures, vol. 21, p. 1719ff, November 2010.
[36] D. Q. S. Wenjun, "Airfoil Design and Numerical Analysis for Morphing Wing Structure," Advanced Materials Research, Vols. 228-229, no. ISSN: 1662-8985, pp. 169-173, 19 April 2001.
[37] G. McKnight and C. Henry, "Large strain variable stiffness composites for shear deformations with applications to morphing aircraft skins," in SPIE Smart Structures and Materials + Nondestructive Evaluation and Health Monitorng, San Diego, California, 2008, 692919-1 ff.
[38] C. Thill, J. Etches, I. Bond, K. Potter and P. Weaver, "Corrugated composite structures for aircraft morphing skin applications," in 18th International Conference of Adaptive Structures and Technologies, Ottawa, Ontario, 3-5 October 2007.
[39] I. Dayyani, A. Shaw, E. Saavedra Flores and M. Friswell, "The mechanics of composite corrugated structures: A review with applications in morphing aircraft," Composite Structures, vol. 133, pp. 358-380, 1 December 2015.
[40] S. Vasista, L. Tong and K. Wong, "Realization of Morphing Wings: A Multidisciplinary Challenge," Journal of Aircraft, vol. 49, no. 1, p. 11ff, January-February 2012
[41] C. Thill, J. Etches, I. Bond, K. Potter and P. Weaver, "Morphing Skins," The Aeronautical Journal, p. 117ff, March 2008.
[42] S. Kota, J. Hetrick, R. Osborn, D. Paul and E. Pendleton, "Design and application of compliant mechanisms for morphing A/C structures," in Smart Structures and Materials / SPIE, San Diego, California, 14 August 2003, p. 24-33.
[43] J. Mabe, F. Calkins and G. Butler, "Boeing's Variable Geometry Chevron: Morphing Structure for Jet Noise Reduction," in 47th AIAA/ASME/ASCE/AHS/ASC Structures, Struct. Dynamics, and Materials Conference, Newport, Rhode Island, 1-4 May 2006, AIAA 2006-2142.
[44] G. Amendola, I. Dimino, A. Concilio, F. Amoroso and R. Pecora, "Preliminary Design of an Adaptive Aileron for the Next Generation Regional Aircraft," Journal of Theoretical and Applied Mechanics, vol. 55, no. 1, pp. 307-316, Warsaw 2017.
[45] A. Rudenko, A. Hannig, H. Monner and P. Horst, "Extremely deformable morphing leading edge: Optimization, design and structural testing," Journal of Intelligent Material Systems and Structures, vol. 29, no. 5, pp. 764-773, 2018.
[46] M. Friswell, "Morphing Aircraft: An Improbable Dream?," in ASME 2014 Conference on Smart Materials, Adaptive Structures and Intelligent Systems, Newport, Rhode Island, September 8-10, 2014, SMASIS2014-7754.
[47] R. Ajaj, C. Beaverstock and M. Friswell, "Morphing aircraft: The need for a new design philosophy," Aerospace Science and Technology, vol. 49, pp. 154-166, February 2016.

### SUMMARY OF THE INVENTION

It is an object of the current invention to provide an actuation concept that can be used for, inter alia, an aerodynamically efficient and yet safe flight control system for an aircraft.

This object is solved by a force actuation element as claimed in claim 1.

A method for adjusting an aero- or hydrodynamic element of an aircraft or of a watercraft, in particular by means of such a force actuation element, is claimed in claim 12. An aircraft comprising such a force actuation element is indicated in claim 6. Further embodiments of the force actuation element, the method and the aircraft are indicated in the dependent claims.

The present invention thus provides a force actuation element, in particular for adjusting an aero- or hydrodynamic element of an aircraft or of a watercraft, comprising
a first end;
a second end;
a first sheet that connects the first end and the second end; and
a second sheet that connects the first end and the second end;
wherein the first sheet and the second sheet together enclose an inner space of the force actuation element which is adapted to be filled with a power transmission fluid, such that a change in the amount and/or pressure of power transmission fluid in the inner space results in a movement of the first end and of the second end relative to each other along a force actuation direction.

The movement of the first end and of the second end relative to each other along the force actuation direction is effected by a pressure of the power transmission fluid on the first sheet and/or the second sheet along a main pressurizing direction that is transverse to the force actuation direction.

The force actuation element can particularly be part of an adjustment mechanism of a control unit as indicated further below and/or be part of an aircraft as indicated further below.

Thus, with the force actuation element as indicated, the actuation force is effected by a pressure of the power transmission fluid that is acting in a transverse direction to the force actuation direction. By effecting the force actuation in this way, i.e. by using fluid pressure for acting transversely to the force actuation direction, a particularly efficient force application and transmission can be achieved. Effectively combining a well-known force-amplifying technique with pneumatic/hydraulic principles, this allows comparatively high actuator forces to be effected at the ends of the first sheet with minimal actuation pressure. Firstly, because pressure can be applied on a relatively large area by the fluid, such that a large force resulting from such pressure can be generated, which acts transversely on the first sheet, forcing the first sheet into a straightened shape.

**In** the context of the present document, a sheet is regarded as a two-dimensionally extending component with a relatively small thickness compared to its length and width.

The first end and the second end are preferably both directly connected by the first sheet and/or the second sheet, which means that the first sheet and/or the second sheet is directly attached to the first end and the second end or even itself forms the first end and the second end. **In** certain embodiments, however, it is also conceivable that the first sheet and/or the second sheet connects the first end and the second end only indirectly, i.e. via a further element, in particular via a further sheet.

Secondly, due to force amplification, the required pressure to effect a certain constant transverse actuator force at both ends of the first sheet diminishes with progressive straightening of the first sheet, theoretically all the way to zero for a perfectly straight first sheet, the latter simply becoming a straight sheet under compressive (buckling) load at this point.

More relevant to eventually effecting a deformation, in case the effected transverse actuator force at both ends is increasing with straightening of the first sheet, the required pressure initially increases with progressive straightening of the first sheet until a certain peak required pressure is reached, after which the required pressure diminishes even with further progressive straightening of the first sheet, again theoretically all the way back to zero for a perfectly straight first sheet.

Introducing the actuation force by means of a distributed pressure avoids, or at least significantly reduces, mechanical-structural problems that arise when a large point force is introduced laterally into a surface. The possibility of generating comparatively low actuating pressures for effecting comparatively high actuator forces allows for reduced dimensioning of the respective pressure generating devices that need to be provided in or on the aircraft or watercraft. A reduced dimensioning of the pressure generating devices not only allows for weight savings, but also safer operation of the air- or watercraft. The pressure generating device can be but does not need to be part of an adjustment mechanism as indicated further below.

If the force actuation element is used in an aircraft or a watercraft, the effected movement of the first end and of the second end relative to each other along a force actuation direction preferably serves to adjust an aero- or hydrodynamic element. The aero- or hydrodynamic element can particularly be a wing or a stabilizer, e.g. a horizontal or vertical stabilizer. If it is a wing, the force actuation element can be adapted to deform the wing or at least a part of the wing in such a way, that a rolling movement of the aircraft or watercraft is generated. Thus, the aero- or hydrodynamic element has the function of an aileron in this case. If the aero- or hydrodynamic element is a horizontal stabilizer, the force actuation element can be adapted to deform the stabilizer in such a way, that a pitching movement of the aircraft or watercraft is generated. Thus, the aero- or hydrodynamic element has the combined function of a stabilizer and an elevator in this case. If the aero- or hydrodynamic element is a vertical stabilizer, the force actuation element can be adapted to deform the stabilizer in such a way, that a yaw movement of the aircraft or watercraft is generated. Thus, the aero- or hydrodynamic element has the combined function of a vertical stabilizer and a rudder in this case. Alternatively or in addition, the aero- or hydrodynamic element can have the function of a trim element. In this case, the force actuation element is preferably adapted to deform the aero- or hydrodynamic element in such a way that a trim function is fulfilled by the aero- or hydrodynamic element.

An aero- or hydrodynamic element is generally understood to be an element specifically designed to have certain properties with respect to a gaseous or liquid medium flowing around it. The shape of the element can for example be optimized with regard to a reduction in air or water drag and/or the generation of an upward or downward lift.

An adjustment of the aero- or hydrodynamic element preferably, but not necessarily, means a deformation of the aero- or hydrodynamic element. Thus, the force actuation element preferably serves to deform, in particular continuously deform, the aero- or hydrodynamic element. In other embodiments, an adjustment of the aero- or hydrodynamic element can also mean a change of position and/or orientation of the aero- or hydrodynamic element.

The use of the force actuation element, however, is generally not limited to aircraft or watercraft. Instead, the force actuation element as indicated can be used in a large variety of other devices and/or applications as well. Many other such devices and/or applications are conceivable, in which the application of a force can be used to actuate an element, in particular where a comparatively low actuating pressure is desired and low actuator strokes are acceptable.

The first sheet is preferably attached to the first end and to the second end of the force actuation element. The second sheet is preferably attached to the first end and to the second end of the force actuation element.

**In** a particularly preferred embodiment, the first sheet and the second sheet are in each case made as a whole in one piece. The first sheet and the second sheet are preferably both continuous sheets in this case. At least the first, advantageously also the second sheet, preferably have a certain flexibility and elasticity, such that they bend when the force actuation element is pressurized by the power transmission fluid.

**In** other embodiments, the first sheet and the second sheet can also each comprise a plurality of elements or each be a part of a unit comprising a plurality of elements. In the latter case, the connection of the first end and the second end is made by the first and the second blade, respectively, via another element. The unit can for example comprise a plurality of rods as the further elements, that are, for example, interconnected by hinges.

The force generated at the ends, i.e. the actuator force, usually acts along a straight line, which passes through the first end with the second end and thus defines the force actuation direction.

The inner space of the force actuation element is preferably delimited completely or in part by the first sheet and the second sheet. **In** order to be able to generate a pressure on the first and the second sheet by means of the power transmission fluid, the inner space is preferably sealed towards the outside. The sealing is preferably against the power transmission fluid, i.e. to prevent the power transmission fluid to escape from the inner space, and more preferably also against the ambient air, i.e. to prevent that air enters the inner space.

An increase in the amount and/or pressure of power transmission fluid in the inner space usually results in a pressure increase, by which a movement of the first end and of the second end away from each other is effected. On the other hand, a decrease in the amount and/or pressure of power transmission fluid in the inner space usually results in a pressure reduction, by which a movement of the first end and of the second end towards from each other is effected. Thus, the force actuation element is preferably adapted to generate an actuation force along two opposing directions.

By stating that the main pressurizing direction is transverse to the force actuation direction it is not meant that the two directions must be at an exact angle of 90° to each other. Instead, it is rather meant that the force actuation direction clearly deviates from the pressurizing direction in the sense that the pressure applied on the surfaces of the first and the second sheet at the respective sheet's local normal direction by the power transmission fluid is translated into a force extending along a longitudinal direction or within the first and/or the second sheet.

The power transmission fluid is preferably a liquid. The liquid can particularly be water or fuel, in particular kerosene, that can be used to power the aircraft or watercraft. If fuel is used as the actuator's power transmission fluid, the respective fuel can be provided for other means, such as powering an aircraft or watercraft, in part and for emergency purposes only. However, overall fuel demand for such actuation is low compared to the amount of fuel required and on board for powering the aircraft or watercraft. By using fuel as the power transmission fluid, overall system weight can possibly be saved as several system functions within an aircraft or watercraft can be combined. In other embodiments, a power transmission fluid in the form of a gas, such as air, or powder would also be conceivable.

**In** order to avoid, or at least reduce, feedback forces and/or moments acting from the counter bearings at the first and second end onto the first and/or second sheet, , the force actuation element preferably comprises a first rotational bearing at both ends, a first rotational bearing that connects the first sheet with the second sheet at the first end and/or a second rotational bearing that connects the first sheet with the second sheet at the second end.

The current invention also relates to an aircraft comprising an aerodynamic element, in particular a wing, a combined stabilizer and elevator, an elevator, an aileron or a stabilizer, and at least one force actuation element as indicated above that serves to adjust, preferably deform, more preferably continuously deform, the aerodynamic element. In certain preferred embodiments, the at least one force actuation element is filled with the fuel of the aircraft, in order to use the fuel as the power transmission fluid.

Furthermore, the invention provides a method for adjusting an aero- or hydrodynamic element of an aircraft, preferably of an aircraft as indicated below, or of a watercraft, in particular by means of the force actuation element as indicated above, the method comprising at least the step of changing the amount and/or pressure of a fluid transmission fluid in an inner space that is enclosed by a first sheet and a second sheet, in order to effect a pressure on the first sheet and/or the second sheet along a main pressurizing direction and thereby move a first end and a second end, which are connected to each other by the first sheet and by the second sheet, relative to each other along a force actuation direction that is transverse to the main pressurizing direction, in order to adjust the aero- or hydrodynamic element.

The present disclosure also provides a control unit for controlling the pitch of an aircraft during flight, the control unit comprising
at least one adjustable control element that allows to control the pitch of the aircraft during flight; and
an adjustment mechanism for actively adjusting the at least one control element, in order to control the pitch of the aircraft.

The adjustment mechanism is adapted to control the pitch of the aircraft by means of a continuous deformation of the at least one control element.

By continuously deforming the at least one control element, the problems associated with malfunctioning of a control loop-based design can be eliminated or at least reduced, since an aerodynamics-based design is working independently based on physical principles. With a continuously deforming control element, the pitch of the aircraft can be controlled in a particularly efficient, reliable and yet safe manner. In contrast to a pitch control based on two or more discrete, contiguous surface elements are adjusted in their position relative to each other, considerably lower curvatures are obtained with a continuously deforming control element. Thus, the generation of shock waves, that often occur at the hinges of two discrete control panels when at an angle relative to each other, can be avoided with such a control unit. Drag and shock waves are possible causes for inefficiencies in flight control and for increased fuel consumption. The continuously deformable at least one control element of the control unit can also be referred to as a continuous morphing element. The continuous morphing element can particularly fulfill the function of a combined stabilizer and elevator. With regard to pitch axis control, the use of a continuous morphing element instead of two or more discrete panels also has the advantages that considerable weight savings are possible, in that the semimonocoque design can be more closely followed at the empennage, i.e. at the tail of the aircraft, and that a fixed attachment of the tailplane root to the fuselage is possible, in contrast to the state of the art where a horizontal stabilizer is allowed to pivot, with large cutouts in the empennage required. Furthermore, pitch control based on one or more continuously deformable control elements largely eliminates single points of failure, such as a failing jackscrew, a runaway trim motor or flight control computer. Thus, while continuously deforming elements have already been used for certain other aspects of flight control, it has been found in the context of the current invention, that the control of the pitch of the aircraft during flight can be improved with regard to both efficiency and safety, if it is based on a continuous deformation of a control element.

Thus, the control unit, which is preferably a primary flight control unit, comprises at least the at least one adjustable control element and the adjustment mechanism. The adjustment mechanism can be, but does not need to be, arranged in, on or at the at least one control element. The adjustment mechanism is preferably able to influence the at least one control element with regard to e.g. its position and/or orientation and/or shape in such a way, that the aircraft's pitch is changed due to an altered air flow and/or deflection in the immediate region of by the at least one control element. The at least one control element usually has a least one surface or surface element that is or can be exposed to the airflow during flight, in order to control the pitch of the aircraft.

With a control of the pitch of the aircraft during flight it is meant that the aircraft's pitch can be altered or at least maintained, e.g. in varying flight conditions, by means of a respective adjustment of the at least one control element.

The adjustment mechanism is a mechanism that allows an active adjustment of the at least one control element e.g. with respect to its position and/or orientation and/or shape. An active adjustment - in contrast to a passive adjustment - usually requires some kind of energy flow to take place, in order to intentionally adjust the respective control element against the force of the inflowing air, and in the case of a morphing flight control, also against the resistance of the deformed mechanical structure. Thus, by means of the adjustment mechanism, it is preferably possible, in particular for the pilot of the aircraft, to change the pitch angle of the aircraft. For enabling the energy flow to take place, an energy source arranged in, on or at the aircraft is usually provided, such as e.g. a generator, a battery or an accumulator for providing electrical energy or a pump for providing hydraulic fluid flow under pressure.

An aircraft is a vehicle that is able to fly by gaining support from the air. It is preferably an airplane but could also be for example a helicopter.

Pitch is a well-known term in aviation, which refers to the rotation of the aircraft around its lateral axis, that usually extends along the span of the main wing of the aircraft. The pitch angle is measured between the aircraft's longitudinal axis and the horizon.

With a continuous deformation it is meant that the respective control element is deformed without having any singularities in the deformation of its overall shape. In contrast to, for example, two hinged panels that are adjusted in their position relative to each other, large parts or even the entire element are deformed in the case of a continuously deformable control element. If large parts of the at least one control element are or can be continuously deformed by the adjustment mechanism, they preferably amount to at least 10%, more preferably to at least 30%, even more preferably to at least 50%, most preferably to at least 70% of the element's total volume.

The at least one control element, which can also be referred to as a continuous morphing element, can particularly be adapted to fulfill the function of a combined stabilizer and elevator, in particular of a combined horizontal stabilizer and elevator. **In** this case, the at least one control element is basically a horizontal stabilizer, a portion of which can be adjusted in its position relative to the rest of the stabilizer, in order to control the pitch of the aircraft. The continuous morphing element is preferably arranged at the tail of the aircraft, i.e. on the fuselage at a distance behind the main wing. The stabilizer is an aerodynamic element that provides longitudinal (pitch) stability for the aircraft. For controlling the pitch, it can only be a portion of the at least one control element or the entire control element that is continuously deformed. By combining the functions of pitch stabilization and pitch control by means of a morphing tailplane, i.e. a continuously deformable element, both functions can be achieved at the same time in a more efficient and safer way, with less drag and without or with at least reduced shock waves.

By nature, pitch control is the most critical of all flight controls. Compared to roll control, while the moment arm can be as large as for ailerons, the actual wing area is much smaller for pitch control, and even more so since it is only the outer morphing tailplane parts which are at a higher angle of attack when twisted, being mostly responsible for any primary flight control effect, reducing the controlling area even further

In particular in the case of large transport airplanes which are invariably equipped with tailplanes of the swept wing type, the characteristic shape of swept wings deformed under an external load is the preferred candidate for a morphing tailplane, with a view to maintaining a closed, continuous and load-bearing wing skin while keeping actuation forces as low as feasible with such a requirement.

The at least one control element is preferably adapted to not only perform a pitch control function, but additionally a trim function. In this case, the adjustment mechanism is preferably adapted to control the trim of the at least one control element by means of a further continuous deformation of the at least one control element. In certain embodiments, the adjustment mechanism can be adapted to control the trim of the control element independently of the pitch of the aircraft.

The control element, which is e.g. in the form of a continuous morphing element combining the functions of a state-of-the-art horizontal stabilizer and elevator, usually has a leading edge and a trailing edge, relative to the usual direction of airflow during flight. **In** this case, the adjustment mechanism is preferably adapted to deform the leading edge and the trailing edge in the same direction, and, advantageously, is adapted to deform the trailing edge more than the leading edge. While a deformation of the control element with a mere "twist" would basically be sufficient for controlling the pitch, this usually leads to large strains in the skin and complicated actuation. With a deformation of both the leading and the trailing edge, the same effect with regard to pitch control is easier to achieve, as this is anyway the characteristic shape appearing in swept wings deformed under an external load, so it is per definition possible to actively deform a wing into such a shape even if it features a closed, continuous skin.

In a particularly preferred embodiment, the adjustment mechanism is adapted to deform the at least one control element for controlling the pitch such that a high to maximum deformation of the at least one control element during flight causes a stall of the airflow around one or more regions of the at least one control element, usually those furthest away from the fuselage. By generating a controlled stall in certain areas of the control element, such as the tailplane tips, under specific circumstances, the downforce effected by the control element can be reduced and the tendency of the airplane to pitch up can be reduced as well. As a result of the stall at parts of the control element, the pitch-related lift force of the control element preferably changes nonlinearly as the deformation of the control element increases.

Thus, the adjustment mechanism is preferably adapted to deform the at least one control element such that with an increase in the deformation of the at least one control element, a lift force effected by the at least one control element changes nonlinearly. In this way, an undesired behavior above a certain angle of attack can be avoided, where the restoring stabilizing nose-down moment after an aerodynamic disturbance no longer increases with increasing angle of attack, but flattens out or even reverses. Such an undesired behavior can be corrected electronically, but with possibly unpredictable negative consequences if it does not function as intended. Due to the effect of the nonlinearity in the relation between deflection of a morphing tailplane and the lift force it generates, this corrective intervention in the stability can be achieved by purely aerodynamic (and therefore predictable and reliable) means.

**In** a preferred embodiment, the adjustment mechanism is adapted to progressively deform the at least one control element both along a first direction from a leading edge towards a trailing edge and along a second direction from the fuselage towards a lateral outer edge of the at least one control element. The main direction of the deformation of the at least one control element preferably extends somewhere in between the main leading edge direction of the control element and the aircraft's longitudinal axis. This is also the deformation observed in the characteristic shape appearing in swept wings deformed under an external load. The leading and trailing edge designations are based on the direction of the inflowing air in normal flight.

For effecting the continuous deformation of the at least one control element, the adjustment mechanism preferably has at least one force actuation element that comprises
a first end;
a second end;
a first sheet that connects the first end and the second end; and
a second sheet that connects the first end and the second end;
wherein the first sheet and the second sheet together enclose an inner space of the force actuation element which is adapted to be filled with a power transmission fluid, such that a change in the amount and/or pressure of power transmission fluid in the inner space results in a movement of the first end and of the second end relative to each other, in particular away from each other, along a force actuation direction, in order to adjust the at least one control element,
and wherein the movement of the first end and of the second end relative to each other along the force actuation direction is effected by a pressure of the power transmission fluid on the first sheet and/or the second sheet along a main pressurizing direction that is transverse to the force actuation direction.

The force actuation element is preferably located within the at least one control element. In a particularly preferred embodiment, the adjustment mechanism has an actuator structure with a plurality of compartments, in each of which a force actuation element as indicated is arranged. Thus, the at least one control element can in this case be continuously deformed by the actuator structure with the plurality of force actuation elements. Together with a skin and possible further elements, the actuator structure can form the at least one control element of the aircraft. By having a plurality of force actuation elements, not only a continuous deformation can be achieved across the control element, but also a particularly fail-safe system can be achieved, i.e. if only one or a few of the force actuation elements fail, a certain degraded flight control effect can still be achieved by the other force actuation element, or elements, deflecting the control element. With more than one force actuation element being arranged in different compartments, an embodiment becomes possible for example, in which the adjustment mechanism is adapted to increase the distance between the first and the second end of a first force actuation element and at the same time to decrease the distance between the first and the second end of a second force actuation element, in order to adjust the at least one control element based on the combined actuation of the first and the second force actuation element. Thus, in this case, the adjustment mechanism comprises at least a first and a second of such force actuation elements and is adapted to increase the amount and/or pressure of power transmission fluid in the inner space of the first force actuation element and at the same time decrease the amount and/or pressure of power transmission fluid in the inner space of the second force actuation element, in order to adjust the control element in both directions by means of both the first and the second force actuation element.

Especially in the case of the adjustment mechanism having an actuator structure with a plurality of compartments as indicated, the adjustment mechanism preferably comprises a plurality of such force actuation elements, which are arranged in rows and/or columns and preferably in the different compartments. An arrangement in rows and/or columns allows to achieve a simple, but efficient deformation by a large number of force actuation elements.

Further preferred embodiments, explanations and details with regard to the force actuation element are given further below in this section.

The current disclosure also relates to an aircraft comprising a control unit as indicated above, the control unit comprising at least one adjustable control element and an adjustment mechanism for actively adjusting the at least one control element, in order to control the pitch of the aircraft. The control element is preferably firmly connected to the fuselage of the aircraft.

Furthermore, the disclosure provides a method for controlling the pitch of an aircraft, in particular of the aircraft as indicated above and/or by means of a control unit as indicated above, the method comprising at least the step of controlling the pitch of the aircraft by means of actively adjusting at least one control element of the aircraft, wherein the pitch is controlled by means of continuously deforming the control element.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a perspective view of a wing of an aircraft according to the prior art;
- Fig. 2: shows a lateral view of the rear part of an aircraft according to the prior art;
- Fig. 3: schematically shows a perspective view of the tail section of an aircraft according to the prior art, with elevators attached by hinges;
- Fig. 4: schematically shows a perspective view of the tail section of an aircraft according to the invention, with continuously deformable morphing elements that are in each case adapted to fulfil the combined function of a horizontal stabilizer and an elevator;
- Fig. 5: shows the tailplane downforce evolvement and local angles of attack with the prior art tailplane of the aircraft shown in Fig. 3;
- Fig. 6: shows the tailplane downforce evolvement and local angles of attack with the inventive tailplane of the aircraft shown in Fig. 4;
- Fig. 7: shows the pitch moment coefficients for the prior art tailplane of the aircraft shown in Fig. 3;
- Fig. 8: shows the pitch moment coefficients for the inventive tailplane of the aircraft shown in Fig. 4;
- Fig. 9: schematically shows a perspective view of the tail section of another aircraft according to the invention, with continuous morphing elements that comprise elevators attached by hinges, in order to fulfil both the function of a horizontal stabilizer and an elevator;
- Fig. 10: schematically shows an element of an aircraft or a watercraft, which can be partly filled by a power transmission fluid, in order to be deformed;
- Fig. 11: schematically shows an element of an aircraft or a watercraft according to a another, preferred embodiment, which is deformable by means of a power transmission fluid;
- Fig. 12: schematically shows a lateral view of a force actuation element for adjusting an aero- or hydrodynamic element of an aircraft or of a watercraft, according to a first inventive embodiment;
- Fig. 13: shows a perspective view of the force actuation element of Fig. 12;
- Fig. 14: schematically shows a lateral view of a fluid-filled force actuation element for adjusting an aero- or hydrodynamic element of an aircraft or of a watercraft, according to a second inventive embodiment;
- Fig. 15: shows a perspective view of the force actuation element of Fig. 14;
- Fig. 16: schematically shows a lateral view of a fluid-filled force actuation element for adjusting an aero- or hydrodynamic element of an aircraft or of a watercraft, according to a third inventive embodiment;
- Fig. 17: shows a perspective view of the force actuation element of Fig. 16;
- Fig. 18: schematically shows an element of an aircraft or a watercraft according to a preferred embodiment, which is continuously deformable by means of a power transmission fluid;
- Fig. 19: schematically shows, for explanatory purposes, an element of an aircraft or a watercraft, which is continuously deformable by means of a plurality of hydraulic pistons;
- Fig. 20: schematically shows a force actuation element under compressive load that is (over-)pressurized with a gaseous power transmission fluid;
- Fig. 21: schematically shows a force actuation element under compressive load that is (over-)pressurized with a liquid power transmission fluid;
- Fig. 22: schematically shows three possible variants for the design of an inventive force actuation element;
- Fig. 23: shows a perspective view of a first version of an inventive force actuation element;
- Fig. 24: shows a perspective view of a second version of an inventive force actuation element;
- Fig. 25: shows a perspective view of a third version of an inventive force actuation element; and
- Fig. 26: shows a perspective view of a load-bearing first sheet comprising fins/ribs.

### DESCRIPTION OF PREFERRED EMBODIMENTS

In the figures, several differing inventive embodiments of a control unit, of an aircraft or at least of parts thereof and of method steps for controlling the pitch of an aircraft as well as of a force actuation element, of an aircraft or at least parts thereof and of method steps for adjusting an aero- or hydrodynamic element of an aircraft or of a watercraft are shown. The same reference signs are used to designate elements of different embodiments having the same or a similar function.

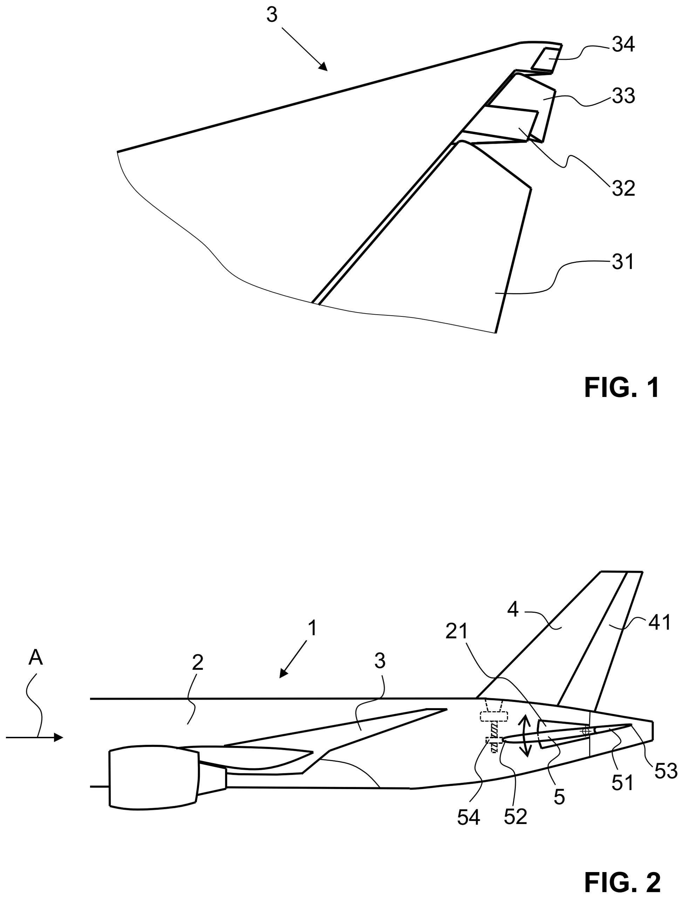

Figure 1 shows the outer part of a wing 3 of an aircraft according to the prior art, which comprises a structure with large discrete control surface panels that are interconnected by hinges and can be driven by respective actuators, in order to control the flight path of the aircraft. As can be seen in Figure 1 the wing 3 comprises, at its trailing edge, an inboard flap 31, an inboard aileron 32, an outboard flap 33 and an outboard aileron 34. Due to the large discrete control surface panels, the possible size of the wing torsion box is reduced. With large airplanes and/or extended wing spans, the problem of aileron reversal can occur at high speed. Therefore, a second inboard aileron 32 is often provided, which further increases the weight and the complexity of the wing 3. When adjusting the shape of the wing 3 by means of the flaps 31, 33 and/or the ailerons 32, 34, in order control the flight characteristics of the aircraft during flight, drag and, at high speeds, shock waves occur in particular in the regions where the different control surfaces are connected by hinges to each other.

Figure 2 shows the rear part of a conventional aircraft 1 according to the prior art. The aircraft 1 comprises a fuselage 2, to which wings 3 are attached. In the tail region of the aircraft 1, a vertical stabilizer 4 with a rudder 41 as well as horizontal stabilizers 5 with an elevator 51 are attached to the fuselage 2. The horizontal stabilizers 5 are formed by an aerodynamic element in each case that serves to control the pitch of the aircraft 1 during flight. The elevator 51 of the horizontal stabilizer 5 forms a control element which can be adjusted in relation to the rest of the horizontal stabilizer 5, in order to change the pitch of the aircraft 1 or to maintain the pitch in changing flight conditions.

In order to hold the elevator 51 in an upward deflected position with respect to the rest of the horizontal stabilizer 5, when increasing the angle of attack of the aircraft 1, a trim tab has often been attached to the trailing edge 53 of the elevator 51. By means of the trim tab, which is not shown in Figure 2, the pressure effected on the control wheel by the air inflowing along the direction of air flow A could be relieved. However, due to the presence of the discrete control surfaces, the horizontal stabilizer 5 according to the prior art is prone to drag and shock waves. In particular when deflected, shock waves may appear at the hinge between the horizontal stabilizer 5 and the elevator 51.

As an alternative to trim tabs, a trimmable horizontal stabilizer was introduced with the Bell X-1 airplane, back in 1946. For this purpose, the horizontal stabilizer 5 is not connected firmly to the fuselage 2, but instead such as to be pivotable (double arrow in Figure 2) relative to the fuselage 2 by means of a jackscrew-based actuator system 54. This allows for pitch trim by adjusting the horizontal stabilizer 5, thus changing the downforce as required while maintaining the elevator 51 and horizontal stabilizer 5 without a deflection angle between them, avoiding shockwaves at high speed. In order to enable the pivoting of the horizontal stabilizer 5, however, the presence of a large cutout 21 is necessary in the fuselage 2.

The provision of a pivotable horizontal stabilizer 5 is simple and powerful; its adjustment by means of the jackscrew-based actuator system 54 is slow and therefore not intended for primary flight control but for trimming purposes. However, in cases of malfunction such as uncontrolled rotation of the jackscrew, immediate interaction is needed by the pilot and the situation can easily become extremely dangerous. With this system, so called pitch trim runaways have been the cause of many fatal accidents in the past.

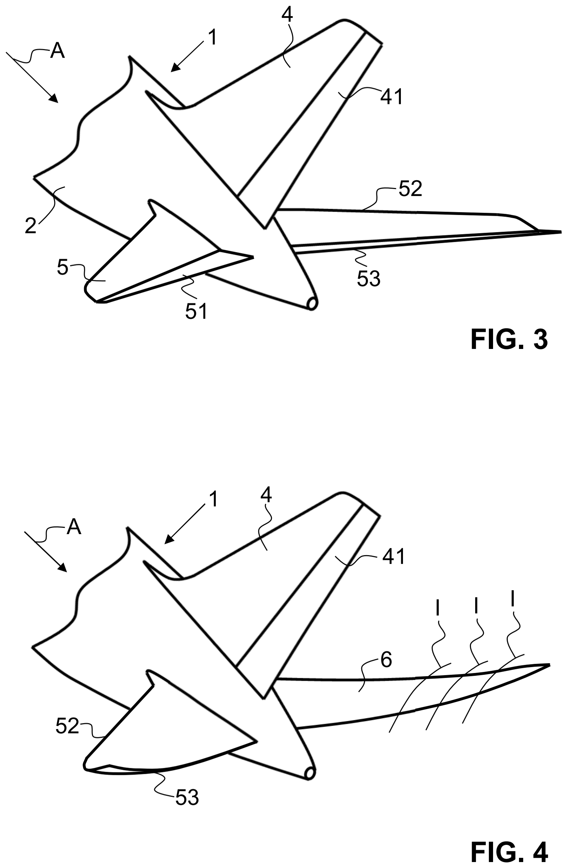

Figures 3 and 4 show the tail section of an aircraft according to the prior art (Figure 3) having a conventional horizontal stabilizer 5 with elevators 51 connected by hinges in comparison with the tail section of an inventive aircraft (figure 4) having a continuous morphing element 6 that fulfills the function of a combined stabilizer and elevator. It can be recognized easily that by deflecting the continuous morphing element 6 in the upward direction in the region of the trailing edge 53, a similar effect can be achieved with regard to pitch control as by means of the elevator 51. However, the continuous morphing element 6 of Figure 4 relates more closely to a continuously deformed swept wing under load as compared to the horizontal stabilizer 5 with discrete control surfaces of figure 3. Due to the lack of deformation singularities with the absence of a hinge, less drag and shock waves occur with the inventive control element, i.e. the continuous morphing element 6, of Figure 4. Due to uninterrupted semimonocoque design of the aircraft's tail with a firm connection of the continuous morphing element 6 to the fuselage 2 and without discrete elevators 51, considerable overall system weight savings are possible as compared to the tail of Figure 3. Also, single points of failure can be eliminated, such as a failing jackscrew, a runaway trim motor or flight control computer.

Furthermore, the continuously morphing tailplane also includes the trim function without hinges and accordingly, without or with reduced shock wave vulnerability. The continuously morphing tailplane thus eliminates the need for a separate trim tab or trimmable horizontal stabilizer from this point of view. Any control force-relieving trim function could be incorporated by dedicating the inner areas of the morphing tailplane to the trim function only, or by integrating a simple offset in the control loop, for example.

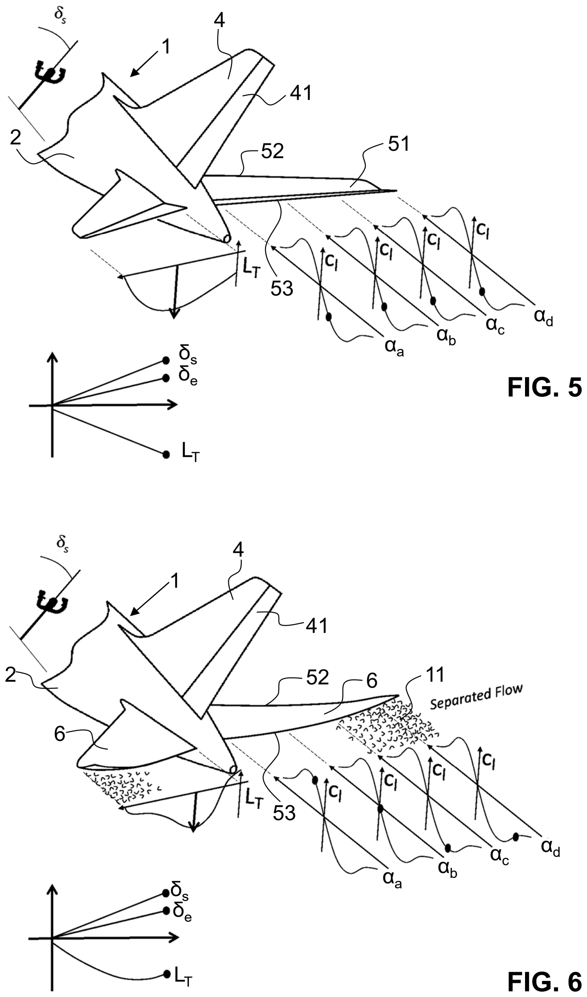

Figures 5 and 6 show the characteristics of the lift evolvement with deflected pitch control elements, i.e. elevators 51 or continuous morphing elements 6, for an aircraft with a conventional tailplane according to the state of the art (Figure 5) and for an aircraft with a continuously deformable tailplane according to the invention (Figure 6): In each case, αₐ, α_{b}, α_{c} and α_{d} designate the local angle of attack of the tailplane at a specific position yₐ, y_{b}, y_{c} and y_{d}, respectively, along the span of the elevator depending on a flight control signal δ_{S} (as specified e.g. by a pilot control element) converted into an elevator deflection command δₑ. Cₗ indicates the resulting local lift coefficient at the respective position of the elevator 51 or continuous morphing element 6.

With the conventional tailplane, the elevators 51 are deflected by the same angle over their entire span, in order to effect a total lift L_{T} of the aircraft. As can be seen from the bottom graph in figure 5, the total lift L_{T} changes linearly depending on the deflection δₑ of the elevators 51.

With the inventive tailplane, the total lift L_{T} of the aircraft changes nearly linearly with small deflections of the morphing elevators (see the bottom graph in Figure 6). With increasing deflections, however, the curve of total lift L_{T} is flattened and, depending on the specific design, possibly reversed due to the morphing elevator tips reaching their local stalling angles of attack. Thus, with the continuous morphing elements 6, the lift force effected by the respective control surfaces changes nonlinearly with an increase in the deformation of the control element, i.e. here of the continuous morphing elements 6. The nonlinear curve of the resulting lift force is due to airflow separations 11 that eventually evolve at the outer lateral areas of the continuous morphing elements 6 with increased deformation. Such partially stalled areas of an actuated morphing tailplane may alter the downforce. Thus, the overall lift distribution changes significantly, introducing a nonlinearity and therefore altering the maneuvering characteristics of the airplane. In an ideal scenario, even aerodynamic pitch limiting close to the airplane's specific main wing stalling angle is conceivable, if the stalled areas on the tailplane are designed to cap the downforce at that specific airplane angle of attack. The appearance of a stall on an airfoil does not mean that lift disappears, however. Depending on the specific airfoil, a more or less sharp drop of lift can be initially observed, but when increasing the angle of attack further, along with drag, lift increases again the same as it would also occur with a simple flat plate.

It is to be noted further that in this context, the full airplane's stall angle (relevant for flight safety) is independent of any stalling occurring at the tailplane, as the latter mainly depends on the total washout angle achieved on the tailplane by morphing; these two stall problems are separate from each other. If the full airplane's angle of attack *increases,* this in fact *reduces* any stall effects on the morphed parts of the tailplane, as it effectively partly rotates those outer stalled parts out of the stall. This interrelation is therefore far from trivial and would require detailed tailoring to achieve the desired angle of attack self-limiting result.

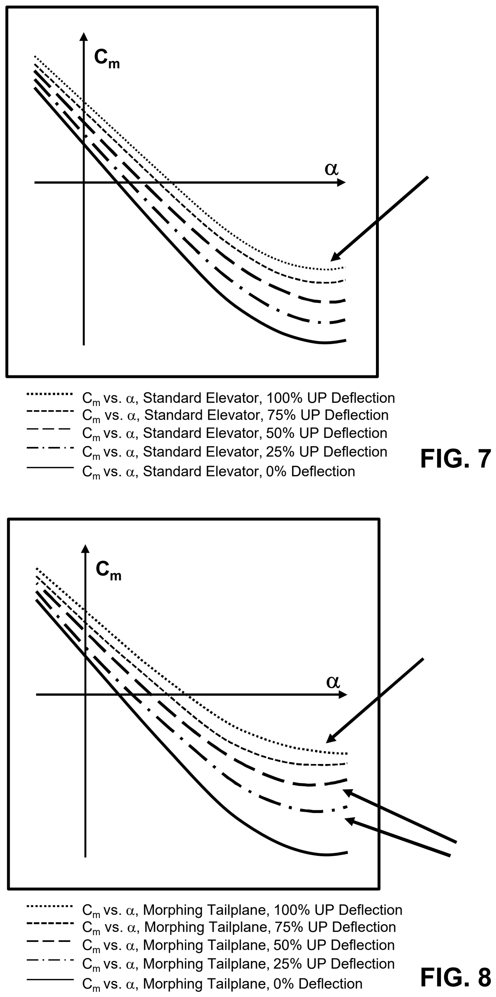

Figures 7 and 8 show pitch moment Cₘ-α plots, which are a useful tool to investigate an airplane's static stability, as they depict its pitch-down moment with varying angles of attack (here the full airplane's angle of attack), i.e. the tendency to return to a neutral and stable pitch angle.

Ideally, the plot is a straight line with negative slant angle. In this case the airplane is considered statically stable, which means that the further an airplane's angle of attack departs from a stable value, the stronger the airplane's tendency to return to that value. The steeper the gradient of the plot, the stronger the stability; a horizontal plot translates to neutral stability and a positive slant to instability.

The curves in Figure 7 show a departure from the straight negative slant line at higher angles of attack (see arrow), showing a neutrally stable behavior approaching the stall, which is similar in nature to the issues experienced by the Boeing 737 MAX airplane eventually leading to the inclusion of an MCAS system.

A plain flap such as an elevator theoretically alters an airfoil's lift curve linearly on deflection. Therefore, the airplane's basic stability issue approaching the stall does not change and the curves in Figure 7 all have the same basic appearance with increasing standard elevator deflection. As a general statement, standard elevators do not drastically alter the basic behavior of an airplane; the slants remain approximately the same.

The plots in Figure 8 show the curves with morphing elevators. As is to be expected, the plot for the unactuated tailplane is the same as in Figure 7. Once the morphing elevator is deflected, however, it becomes apparent that the lift produced by the morphing elevators is evolving in a nonlinear manner.

A comparatively small deflection starting from the unactuated state leads to a considerable change in moment, indicating a powerful flight control specifically at low deflections resulting from a full morphing tailplane area deflecting rather than just a smaller standard elevator area, which is important considering that the morphing tailplane should ideally incorporate the trim function as well. Some limited further deflection does not change the results qualitatively, showing a more linear lift evolvement up to that point, with the basic instability behavior of the airplane unchanged.

With further deflection up to full deflection, nonlinearities affecting the curves due to stalls start to appear at the tailplane tips. Above a certain angle of attack, a considerable flattening of the curve occurs, indicating a general reduction in static stability. However, besides the flattening of the curve, the area of static instability is moved to higher angles of attack or disappears altogether (see arrows). This behavior is very different to the one observed with state-of-the-art elevators.

This stabilizing effect is indeed of particular importance at full nose-up deflection, since such a full elevator deflection is usually required only in slow flight and approaching the full airplane's stalling angle of attack. This is when a high angle of attack is reached while at the same time the kinetic energy of the airplane is low, and therefore the consequences of a stall are more perilous than at higher speeds. During such slow flight close to the stall, any unstable behavior would quickly aggravate the stall, possibly making it unrecoverable.

At higher speeds, much lower elevator deflections are required to achieve a certain pitch angle, and while instabilities per se are undesirable, it is unlikely that the airplane would even reach such high angles of attack areas at high speeds where these instabilities become an issue. Besides possibly being overloaded by high aerodynamic forces by large elevator deflections in such a scenario, the airplane would most probably rather start a steep climb with a high pitch angle before eventually slowing down and increasing its angle of attack. Due to the higher speeds, the elevators are much more effective, which comes in combination with a higher kinetic energy state of the airplane.

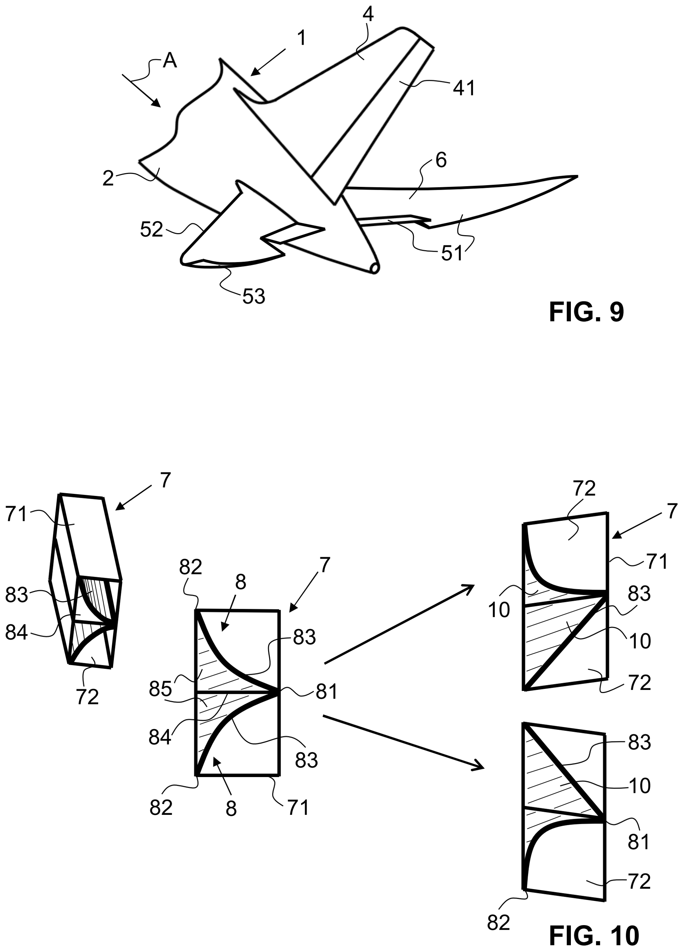

The tail section of the model airplane shown in Figure 9 also represents a possible embodiment of an aircraft with an inventive control unit combined with state-of-the-art elevators. Installing both types of pitch control elements at the same time has the advantage that two independent systems are available. This is also in the sense of redundancy, which is important for certification. The aspect that it is not necessary to exclusively switch to an entirely novel system with stand-alone morphing pitch control straight away, but that well-known aspects with discrete elevator panels are still present, may also make certification easier for e.g. a transitional period.

In the following, different possible adjustment mechanisms for actuating the primary flight control element, such as e.g. the pitch control element, including an adjustment mechanism with an inventive force actuation element, are discussed. Requirements for primary flight controls are also considered along various actuating agents including their advantages and drawbacks.

### Requirements for Morphing Flight Controls

With the application of morphing technologies to aircraft flight control, several requirements must be considered, which ideally are all fulfilled at once. While for some requirements it is possible to accept a less-than-ideal compromise in favor of perfectly matched other criteria, some are indeed imperative requirements.

Each morphing technology generally relies on a specific 'actuating medium' defining the resulting technology's usefulness for a specific purpose, which in this case is active airplane primary flight control. To date most morphing technologies rely on the following available actuating agents in one form or another:
- Internal mechanical: Bistable Structures, Shear Center Adjustment
- (Electro-)thermal: Shape Memory Alloys, Material Property Adjustment
- Direct electrical: Piezo Elements
- Direct (Electro-)Mechanical: Servos and Levers
- Hydraulic and Pneumatic: Pistons, Servos and Levers

In order for a technology to be useful as a flight control, fast actuation rates need to be achieved. This particularly applies to primary flight controls such as elevators, ailerons and rudders, for which a low travel time is required to enable swift aircraft response. The required times to reach full control deflection after receiving the corresponding signal vary by airplane type; for transport category airplanes this is typically around 0.5 to 1 second. For some secondary flight controls such as flaps, slower actuation is acceptable. For primary flight controls, this rules out slower solutions such as thermally actuated mechanisms.

Whereas staggered deflection may be acceptable for a secondary flight control, the same does not hold true for a primary flight control surface: the mechanism must enable the usage of the control's full range of motion, and any intermediate setting must be reachable and controllable with precision. Both directions of travel must be served the same without showing any undue friction and/or hysteresis behavior. Mechanisms relying on bi-stable characteristics, although attractive from a high-load morphing point of view, are therefore ruled out as candidates for primary flight controls, unless adapted in some way. However, even with staggered stable states of such structures, the required precision for reaching intermediate actuation states may not be achieved. Thermal actuation is problematic as well from this perspective as temperatures would need to be controlled very precisely, which is difficult to achieve in the rapidly changing environment of an operating airplane.

It is expected that for morphing mechanisms capable of sustaining high loads, the actuation force or power to be delivered by an actuator will be very high as well. In order to reduce the risk of burning actuators, early fatigue or simply for the reduction of required control actuation power, it is not only very desirable, but indeed imperative to precisely lock the actuator in its deflected state. This locking and unlocking must be a very fast process to achieve fast actuation rates, and for this reason it is advisable to combine the locking mechanism with the actuation agent supply control. This effectively rules out systems employing Piezo elements, due to their continuous need of high electrical actuation currents; similar considerations apply for directly controlled and electrically actuated servo systems, unless they are mechanically modified to block any back feeding. Hydraulic actuators easily fulfill this requirement by blocking the control valve, thereby holding the actuator in place.

Whichever actuation mechanism is used, the actuating medium needs to be supplied in the required amount and condition. For example, the voltage required by Piezo elements must be generated and supplied, and hydraulic fluid must be supplied in the appropriate amounts and pressures. To avoid feasibility problems, any morphing mechanism actuator should rely on supplies like generators and pumps which are able to meet such prerequisites without major modifications. In this example this would particularly mean no excessively high voltage or pressure demands by such actuators.

Safety aspects are of paramount importance in large transport airplanes where human lives are at stake. Any reasonable measures to mitigate unnecessary risks and hazards must therefore be undertaken. In the context of morphing mechanism actuation, this means avoiding any system combination which per se poses a risk. Using electrically controlled Piezo elements in a wing structure filled with combustible fuel may be risky, particularly when considering that wiring carrying high voltage is needed. Even slight wire chafing or damage - not unheard of in an airplane operating environment with ever-present vibrations and fatigue - could lead to arcing, ignition of fuel in the wing tank and loss of the airplane.

Additionally, transport airplanes must be able to sustain damage by lightning to a certain degree. Lighting strike could have an effect on Piezo elements, either by destroying and thereby rendering them unusable, or actuating them in an undesired and uncontrollable way. Either way is unacceptable for flight control purposes. Similar considerations apply to any electrically controlled system.

It is likely that the state-of-the art semimonocoque wing design using spars, ribs and stringers to support a thin skin cannot be upheld completely. Some instabilities must be introduced and then stabilized again in a variable and controlled manner. Still, deviations from the state-of-the art wing design should be kept to a reasonable minimum, and the resulting structure must adequately replace the functions of spars, ribs and stringers in their compound.

At the very least, any actuating concept should not conflict with other systems. Preferably, systems would provide several functions concurrently.

Many parts and structures of an airplane fulfill several functions. For example, in some older types such as A300 or Concorde, the hydraulic actuator actuating the landing gear acted simultaneously as the landing gear's sidestay. Another typical dual function is seen with integral fuel tanks where the wing structure by itself, with some sealant added, doubles as the fuel tank. Placing the fuel in the wing tank has several structural and payload benefits. Therefore, such an arrangement would preferably be maintained in a morphing wing design, allowing for the fuel to be stored within the morphing wing.

With complexity of mechanisms come weight and an increased risk of failures. It is therefore desirable to keep such mechanisms as simple as possible, with low moving part counts and no hinges that could block or break. Compliant mechanisms perform well in those aspects, so employing at least some of their beneficial characteristics in a high-load morphing mechanism could be beneficial. Keeping mechanisms simple usually entails simpler and cheaper maintenance as well. From a safety aspect, such mechanisms should be designed fail-operational that in case of catastrophic failure they allow for other parts of the mechanism to partially take over the function, or at the very least fail-safe so that the full system jams in a controlled way without creating additional hazards.

To date no widely known wing morphing technology has been developed taking all these requirements above into consideration. All combined they indicate a strong case for hydraulic or pneumatic actuation.

As the only actuating medium concurrently fulfilling the most crucial requirements consisting of fast actuation rate, precise and continuous controllability, and lockability, a wing morphing system for large airplanes would likely need to be hydraulics-based. A major disadvantage of hydraulic actuators has traditionally been their relatively high weight; additionally their high pressure demand as well as their characteristic of introducing very high point loads are particular issues.

However, all three issues can be overcome with the inventive force actuation element, which is lightweight, easily controllable with low pressure, forming an integral part of the wing structure and is delivering very high actuation forces in the form of a line load.

### Requirements for Morphing of Highly Loaded Wings

To date, attempts of transitioning active morphing technologies developed at the level of small airplanes to actual highly loaded wings have not witnessed a breakthrough, as these current technologies tend not to fully address one major issue when considering large transport airplanes: the wing loading on such airplanes is larger than what is found with small drones by a factor of up to 25. In order to be upscalable to a larger airplane size, a wing structure and morphing mechanism needs to maintain a stiffness-to-weight ratio of similar order of magnitude at each level.

A structural concept able to fulfill this requirement would likely show geometric similarity with regard to the load-bearing function at all airplane size levels. For good reason, the semimonocoque design approach with a closed, continuous and load-bearing wing skin has been the proven state of the art for decades to achieve an acceptable stiffness-to-weight ratio for all wing sizes. The structural concepts are geometrically similar for both small and large airplane wings.

Any deviation from this - such as by the inclusion of very flexible parts in the wing skin - may lead to a lowered overall stiffness-to-weight ratio, as the load-bearing capability of the wing skin is reduced. Therefore, a closed, continuous and load-bearing wing skin should be maintained. Any resulting high internal forces accepted as given and an actuation capable of producing such high forces must be used, while simultaneously fulfilling the requirements for morphing flight controls described above. The inventive force actuation element is such an actuation.

### Deformation of Highly Loaded Wings

For a given passive load distribution, passive deformation leads to one specific shape, which for a tailplane can resemble the one shown in Figure 4. Since this is the shape resulting from an outside load, it is indeed possible to achieve this shape while maintaining a closed, continuous wing skin. Conversely, it is possible to achieve this same shape with the same skin by internal actuation. It is therefore of interest to verify how this shape could be tailored, so that different shapes and, in particular, different overall washout angles can be achieved for an identical passive load, if the leading edge is progressively constrained from displacement, starting from the wing root. For a typical wing planform, as in the case of the continuous morphing element 6 in Figure 4, the following occurs, if isolines I of identical upward displacement are observed: with an increasing amount of leading edge 52 constraint, the angle between those isolines I to the airplane's longitudinal axis becomes larger, and so does the achievable twist/washout including with it the aerodynamic effect on lift. Effectively, the isolines I turn into spanwise direction with increasing twist, resulting from an increase in leading edge constraint.

It is noteworthy that the isolines I generally remain almost straight lines when projected to a wing planform, with a very moderate bend away from the wing root, near the leading and trailing edges. From a morphing perspective, this means that almost no morphing occurs in that direction - if cut along this line, the chord line of the resulting section airfoil would remain practically unchanged. Conversely, in a section cut at a right angle to the isolines I, the resulting airfoil's chord is changing in a way equivalent to camber morphing. It can be therefore concluded that, for a swept wing to achieve the same characteristic shape as results from passive deformation, a mechanism producing the equivalent to camber morphing is required, along an axis that lies between that swept wing's leading edge and the aircraft's longitudinal axis.

### Internal Actuation of Highly Loaded Wings with Closed Skin

With the basic desired outer shape and deformation type of the wing set, the question remains how to actuate the morphed section of the wing (or the flight control element). The forces resulting from the closed wing skin are expected to be very high and beyond the capabilities of most current actuators.

Current passive morphing technologies applicable to high load situations have been investigated by Gandhi [27] and Runkel [28]. In particular Gandhi's solution shows a possibility for high-load camber morphing by introducing a bi-stable buckling element as a diagonal in a trapezoidal torsion box of a wing. In this way, two distinct and stable positions are achieved by allowing a deformation like a skewing parallelogram or trapeze. Runkel's approach is very similar, effectively replacing a rib/torsion box by a shear web made of chiral structures, which settles (with the same type of skewing parallelogram motion) in two different positions, depending on whether an outside load is applied or not.

The most important requirement for a morphing technology to be used for active flight control purposes is its ability to achieve a quick, continuous and precisely controllable motion. Both Gandhi's and Runkel's solutions are only stable in two distinct positions. However, Gandhi's approach is, in effect, an inverse of a very old camber morphing solution shown by Parker in 1920 ([3]), where the wing is made of several trapezoidal 'torsion boxes', the diagonals of which can be controlled in length by pulling control wires. The diagonals can thereby be precisely controlled by adjusting their lengths, enabling a continuous and precisely controllable camber morphing motion. Here too the motion of such a 'torsional box' could be imagined like that of a skewing parallelogram, or trapeze. Such a torsion box therefore becomes a control element.

Thus, the next question to be answered is how to best introduce a controlling force, in order to generate a force high enough for continuously deforming such a control element, and ultimately the wing with closed, continuous skin built around it.

An embodiment of a possible adjustment mechanism 7 that is based on pressing a power transmission fluid 10 into several constrained inner spaces 85 for effecting deformation is shown in Figure 10. As can be seen from Figure 10, the adjustment mechanism 7 according to the present embodiment comprises an actuator structure 71, which here has two compartments 72. **In** each compartment 72, a load-bearing sheet 83 is arranged that extends transversely from one to the opposite corner of the respective rectangular compartment 72, thereby delimiting an inner space 85 having an approximately triangular cross-sectional area. The load-bearing sheet 83 extends from a first end 81 to a second end 82, which ends 81, 82 are additionally interconnected via two perpendicular walls of the actuator structure 71. One of these perpendicular walls forms a partition wall that separates the two compartments 72 of the actuator structure 71 from each other. The partition wall can also be referred to as a second sheet 84 due to its generally similar form as the first load-bearing sheet 83. Similar as the load-bearing sheet 83, the second sheet 84 also encloses at least partially the respective inner space 85 of each compartment 72 and connects the first end 81 to the second end 82 - at least via a further sheet-like element that is formed by a further wall of the actuator structure 71. In the undeformed state, as shown in the left of figure 10, the load-bearing sheet 83, which is made more flexible than the second sheet 84, is convexly bent towards the liquid-filled inner space 85.

**In** each case, a force actuation element 8 is formed by the respective load-bearing first sheet 83, the second sheet 84 and the respective first and the second ends 81, 82. The partition wall of the actuator structure 71, which separates the two compartments 72 from each other, thus forms the second sheet 84 of each of the two force actuation elements 8.

The vacancy between the convex side of the load-bearing sheet 83 and the actuator structure 71, i.e. the inner space 85, becomes an enclosed volume, which can be filled with a power transmission fluid 10 under pressure. If an incompressible fluid is used, the enclosed volume directly and precisely controls a parallelogram geometry (see the right side of figure 10). Thus, fluid-assisted force actuation and thereby, deformation of the adjustment mechanism 7 and any control element attached to it, can be achieved.

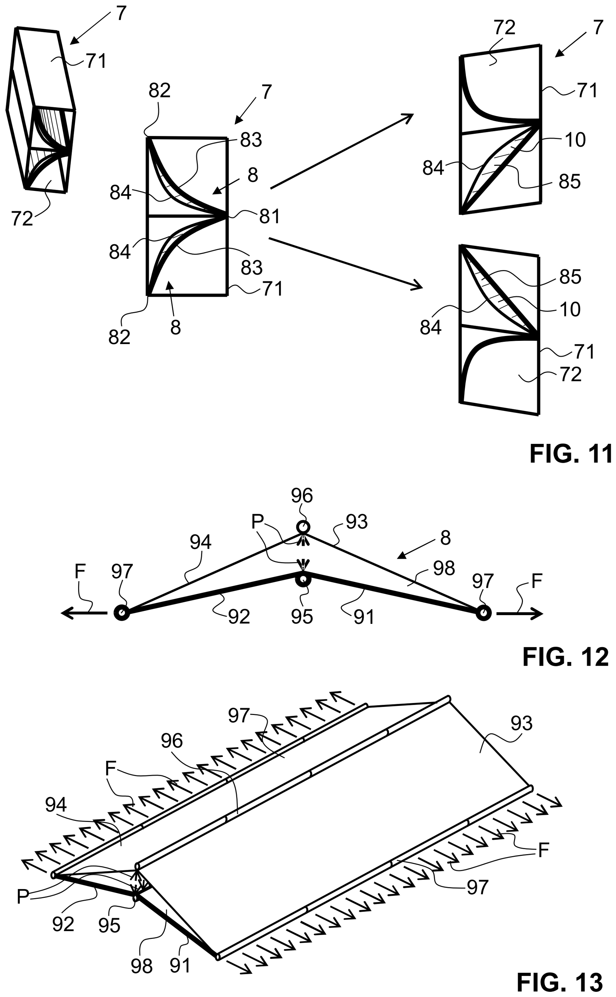

To reduce the demand of this power transmission fluid 10, another second sheet 84 (also named backstop) can be introduced on the convex side of the load-bearing sheet 83, enclosing the power transmission fluid 10 into a smaller volume, as it is shown in the embodiment of Figure 11. With its sole purpose being the containing and enclosing of the power transmission fluid 10, the backstop (or second sheet 84) is under positive hydrostatic or pneumatic pressure only, and its geometry is selected to reduce the volume of the power transmission fluid 10 to near zero when the load-bearing sheet 83 has reached its maximum desired compression state (i.e. the minimum diagonal length has been achieved). Due to its appearance the resulting force actuation element 8 is named Crescent-Shaped Actuator (CSA), with two versions Crescent-Shaped Hydraulic Actuator (CSHA) and Crescent-Shaped Pneumatic Actuator (CSPA).

In a simplified embodiment of the CSA shown in Figures 12 and 13, the curved sheets 83, 84 of the CSA are replaced by straight panels 91, 92 and 93, 94 jointed by strap hinges 95, 96, 97. Actuation is accomplished by introducing an internal load in the inner space 98 along a main pressurizing direction P, such as could be achieved by e.g. a rotating camshaft. The first and second back panels 93, 94, which are connected to each other via the back strap hinge 96 and to the load-bearing first front panels 91, 92 via the connecting hinges 97, effectively act as a bracing or support for the transverse force needed to push the front strap hinge 95 connecting the load-bearing first front panels 91, 92 downwards. Once the load-bearing first front panels 91, 92 form a straight line in the fully extended state, the normal force required is reduced to zero, unloading the backstop, or back panels, respectively.

To achieve this function as a support, and assuming the crescent-shaped actuator (force actuation element 8) overall works against a compressive force such as produced by a compression spring, it follows that the back panels 93 and 94 are always under tensile force, while the front panels 91, 92 are always under compressive force. This implies that the load-bearing front panels 91, 92 must be dimensioned to withstand buckling, and therefore need a larger strength than the backstop panels 93, 94 where only tensile stress is present. The first and the second end of the force actuation element 8 are here formed by the connecting hinges 97.

While the pressure acting along the main pressurizing direction P could basically be produced by e.g. a hydraulic piston or a mechanical extender driven by a jackscrew, a power transmission fluid, such as water, fuel or air, is used according to a preferred embodiment.

This allows for even force introduction into all sheets, avoiding stress concentrations. Additionally, large parts of the panels are thus in contact with pressurized fluid, allowing for a comparatively low pressure (acting along main pressurizing direction P) to produce a large overall transverse force (along the main force actuation direction F).

**In** all of the embodiments, the overall force effected by such a force actuation element 8 (which can, but does not need to form a part of an adjustment mechanism 7 for adjusting a control element of e.g. an aircraft) is directed from the second end 82 to the first end 81 (or vice versa), i.e. along a force actuation direction F.

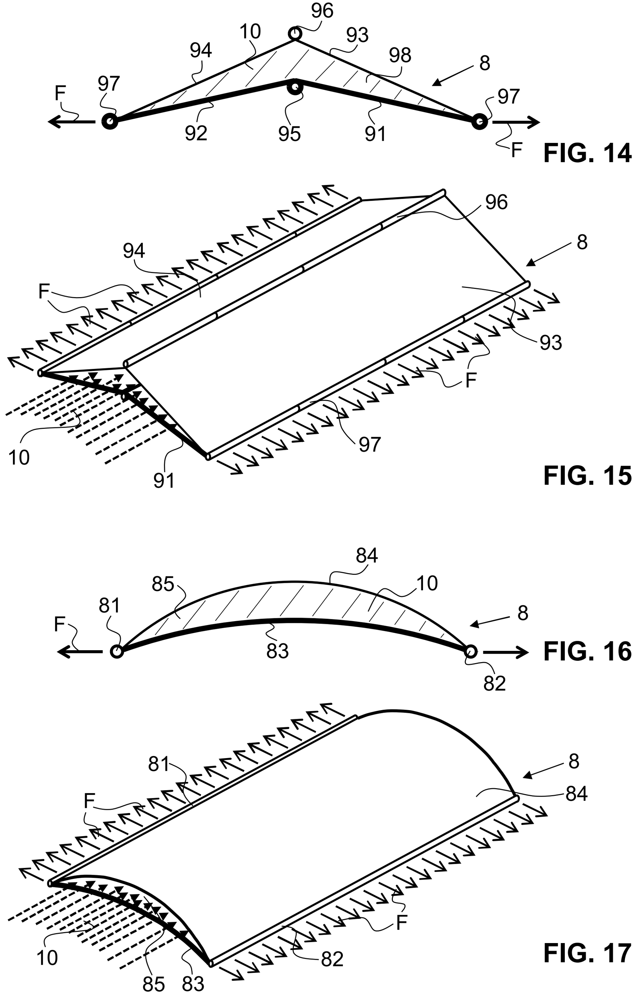

If the flat-paneled force actuation element 8 of Figures 12 and 13 were forcibly filled with fluid 10, as shown in the embodiment of Figures 14 and 15, the volume of the cavity enclosed by the panels 91-94 expands (assuming no fluid 10 leaving the actuator on the other side). The fluid pressure acting on the panels 91-94 forces them apart, which in turn straightens the two load-bearing front panels 91, 92, driving the ends of the force actuation element 8 (i.e. the connecting hinges 97) apart with high force. The back panels 93, 94 act as a support of the fluid 10 which presses onto the load-bearing front panels 91, 92. Therefore, the same applies: the back panels 93, 94 are under tensile stress only and the load-bearing front panels 91, 92 must withstand buckling.

The back panels 93, 94 must be rigid enough to withstand bulging under the pressure of the fluid 10 acting on it. For the load-bearing front panels 91, 92, their rigidity must again withstand bulging because of fluid pressure, but an additional, more complex problem must be addressed as well: the panels are under compressive load, making them prone to buckling. Due to their hinged connections, the load-bearing front panel 91, 92 would buckle in first mode, which is precisely the bulging motion that the fluid pressure creates as well, so the panel's tendency to buckle is amplified by the fluid pressure acting on the panel. Therefore, the load-bearing front panels 91, 92 must be dimensioned to withstand first-order buckling and an additional, buckling-inducing force acting in direction normal to their surfaces.

Once the force actuation element 8 reaches its fully extended state, the load-bearing front panels 91, 92 form a straight line, transferring the force through the force actuation element 8 directly, and in an ideal case no pressure is required to hold them in place. Again, in the fully extended state of the force actuation element 8, the backstop is effectively unloaded.

If a liquid is used as fluid 10 rather than gas, the comparatively very low compressibility of liquids leads to a further desirable effect. When the fluid 10 is maintained at a constant volume (i.e. no fluid 10 is added or removed from the cavity), and assuming rigid panels, geometric constraints dictate that the force actuation element 8 maintains its shape without input of any holding or actuating force. Any change of actuator extension would entail a change of volume, which is not possible if the volume of the inner space 98 is held constant by blocking the fluid 10 supply.

Unlike gases where the volume is in direct correlation to the pressure, with liquids not even very high pressures can change this volume (assuming incompressibility). Thus, assuming rigid panels 91-94, no amount of force acting on the ends of the force actuation element 8 could change this geometry and extension state. The force actuation element 8 therefore effectively behaves, not as a thin-shelled tube, but as a single solid body with very high rigidity. In reality, however, the actual actuator rigidity depends on the compressibility of the liquid, which is still very low compared to a gas, but varies somewhat between liquids. Actuator failure would be reached once panels or hinges give way, such as buckling of the load-bearing front plates 91, 92. An additional advantage of using liquid instead of gases is the liquid's ability to support and change the buckling behavior of the load-bearing front panels 91, 92, thereby directly affecting their dimensioning.

In the embodiment of figures 16 and 17, the rigid flat panels 91-94 have been replaced back to thin and flexible (e.g. compliant) sheets 83, 84, which mostly maintains the same mechanical behavior of the force actuation element 8. The backstop, i.e. here the second sheet 84, still acts as a support of the fluid 10 which presses onto the load-bearing sheet, i.e. here the first sheet 83. The second sheet 84 therefore is under tensile stress, the load-bearing first sheet under compression. The thin-walled second sheet 84 easily adapts to any actuator extension shape while reliably maintaining the volume of the fluid 10; as the pressure of the fluid 10 acts onto the concave area, the resulting exclusively tensile stress poses no problems. As for the load-bearing first sheet 83, pressure of the fluid 10 acts on its convex side. It is thereby acting as an unbuckling force (which is indeed the actual principle of operation of the CSHA), having the opposite effect on buckling described above for the flat panels 91-94. The load-bearing first sheet 83 by itself is more prone to buckling than the rigid flat-paneled/hinged version, if a thin sheet is used to allow for bending into a curved shape. However, this effect is countered by the unbuckling effect of the pressure acting on the convex side of the load-bearing first sheet 83, as opposed to the buckling-inducing effect with the flat panels 91-94. Overall, the use of two partially compliant, thin-walled sheets 83, 84 reduces complexity and weight when compared to the flat-paneled version of figures 14 and 15.

For the resulting forces of the force actuation element 8, in general actuation pressures are very low, which is a strong contrast and improvement compared to the usually very high required fluid pressures of state-of-the-art hydraulic systems; as mentioned, it reaches zero with a fully extended actuator. Accordingly, the backstop is under tensile force (disappearing upon full extension). The compressive load acting on the load-bearing first sheet 83 is particularly high with a short backstop (i.e. low enclosed volume of fluid 10); it reaches reasonable levels with backstop lengths above 105% of load-bearing sheet length. This comes at the price of a higher enclosed fluid volume and thus actuator weight, unless this volume is used otherwise.

The Crescent-Shaped Hydraulic Actuator is a force actuation element 8 that is expected to be lightweight, volume-controlled with comparatively low required working pressures (reaching zero in the fully extended state), and able to produce the high internal forces at the low strokes required commensurate with morphing of a highly loaded control element internally deforming a wing with closed, continuous skin. The length of such a force actuation element can be individually selected as needed, and it produces clearly defined line loads on each end 81, 82, particularly if such ends are formed in a way to transmit the forces through a cylindrical surface of a roller bearing type.

As part of an adjustment mechanism 7 with optionally an actuator structure 71, the force actuation elements 8 as described here and shown in the figures can be used to adjust, i.e. deform, in particular continuously deform, an aerodynamic element, such as a flight control element, of an aircraft. All types of primary flight control functions, such as elevators, ailerons and rudder, can be served with such a design. Moreover, the force actuation elements 8 as disclosed can also be used to adjust, i.e. deform, in particular continuously deform, a hydrodynamic element, such as a control element, of a watercraft. Thus, all explanations made above and in the following with respect to aircraft likewise apply to watercraft as well.

Since these force actuation elements 8 are embedded within the control element 6 and in particular inside a wing structure where fuel is usually stored, it lends itself to use fuel as the power transmission fluid, the part of which used in the CSHAs then effectively becoming 'flight control fuel'. Since final reserve fuel in the order of a minimum of 30 minutes' flight time is usually carried on board and virtually never used in an airplane's lifetime (which weighs around one metric ton in a standard airliner such as the A320), this amount of fuel could be used for flight control purposes rather than just carrying it in a feed tank, making efficient use of resources on board, taking the overall system architecture into consideration and without rendering the overall system unduly heavy. Reaching this minimum fuel state and starting to consume this final reserve fuel automatically mandates the declaration of an in-flight emergency, a status which, among other certification leeway, allows for impaired flight control (such as when only a reduced number of CSHA force actuation elements 8 could be controlled due to reduced availability of 'flight control fuel', instead of all of them, as per design). Due to low fluid pressures required, state-of-the art fuel pumps can be used for fluid supply. This effectively negates the need for a separate hydraulic system to power flight controls. In large transport category airplanes, the tailplane often contains a fuel tank for trim purposes. In all current transport category airplanes, an Auxiliary Power Unit (APU) is located near the tailplane. This means that in any case, fuel along with fuel lines and pumps are all present in the tail section of an airplane, allowing fuel to be used in a morphing tailplane for pitch axis control purposes as well.

In addition to making use of fuel present in the wing, the hydraulic version CSHA offers distinct advantages over the pneumatic CSPA which justify the additional weight of actuation liquid rather than actuation gas. If an almost incompressible liquid is used rather than a gas, such an enclosed volume features some properties of a solid body. On one hand this is restricting the motion of the load-bearing first sheet 83 to both sides as long as no liquid is added or removed, thereby locking it firmly in place in any desired position to include the neutral one, thereby fulfilling a specific requirement for morphing flight controls. With gas under pressure, the same kind of firm locking would not be feasible, since the gas could be compressed further.

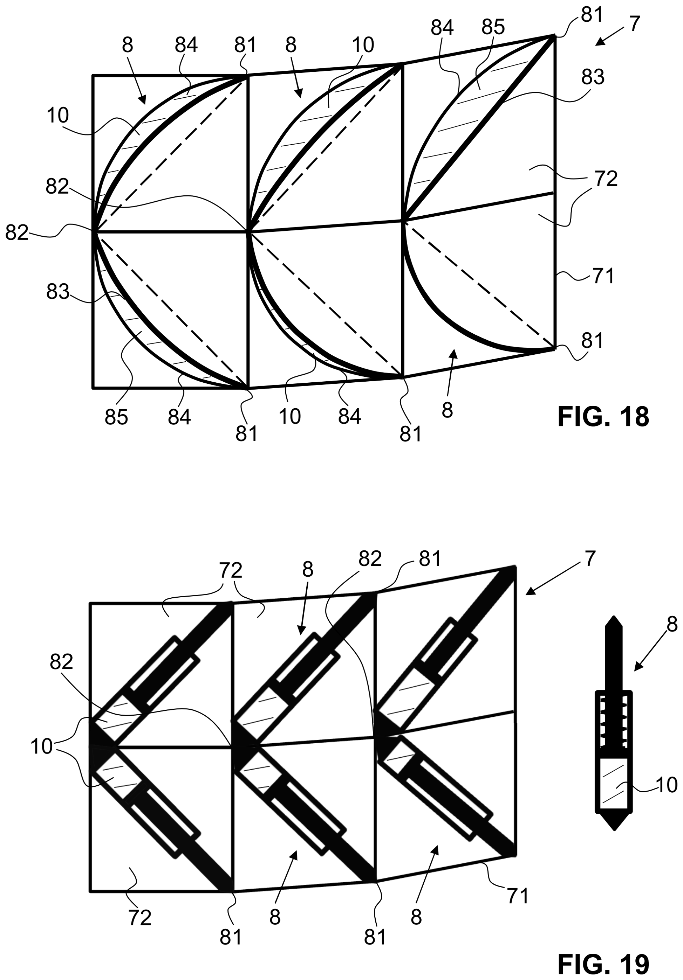

With force actuation elements 8 in the form of CSHAs embedded in a stack of rectangular-or square-shaped compartments 72 of an actuator structure 71 in the form of tubes or casings as shown in figure 18, it is now not only possible to precisely and continuously control the outer curvature by adding or removing power transmission fluid 10 appropriately at each CSHA, but also to lock a certain shape in place without any further actuation, by simply locking the fluid supply lines.

In order to achieve improved controllability of deformation actuation in two directions, the system, i.e. the adjustment mechanism with the actuator structure 71, can be extended by introducing a second row of such force actuation elements 8 which are acting in the opposite direction, as shown e.g. in the embodiments of Figure 18 and 19. In both embodiments of Figures 18 and 19, the adjustment mechanism 7 comprises an actuator structure 71 with a plurality of rectangular compartments 72 that are arranged in rows an columns. Ich each of the compartments 72, one force actuation element 8 is arranged. The adjustment mechanism 7 can in each case be embedded within a continuous morphing element 6 of an aircraft, in order to actively adjust, i.e. deform, the continuous morphing element 6 in a deformation type equivalent to camber morphing and thereby control the flight path of the aircraft.

While CSHA-type force actuation elements 8 are used as actuators in the embodiment of Figure 18, hydraulic pistons are used as force actuation elements 8 in the embodiment of Figure 19. The actuator structure 71 and the plurality of CSHA-force actuation elements 8 or hydraulic pistons in each case form an adjustment mechanism 7 that serves to continuously deform an aerodynamic or hydrodynamic element, such as e.g. a continuous morphing element 6 that fulfills the combined function of a horizontal stabilizer and an elevator. In the undeformed state of the actuator structure 71, the force actuation elements 8 are all arranged in parallel to each other. A further part of the adjustment mechanism can be formed by a pressure generating device that is not shown in the figures.

For deforming the aerodynamic or hydrodynamic element, the CSHAs of Figure 18 act in a very similar and powerful way to standard hydraulic cylinders of Figure 19, in that a blocked fluid supply locks a certain extension state and deformation in place. Together with the CSHAs acting in the opposite direction, the deformed actuator structure 71 acts the same as return springs would. The main advantages that distinguish the CSHA from a standard hydraulic actuator is its lightweight design: it comprises basically of two flexible sheets 83, 84 (Fiber-Reinforced Composites are ideally suited for this purpose), with a very large acting area for the fluid (as opposed to a small area of a standard piston), along with a force amplification function. Commensurate with F = p x A, this leads to comparatively very low actuation fluid pressures, which enables the use of thin-walled, flexible and lightweight sheets 83, 84. Further, it produces a line instead of point load and can be trimmed to any length desired. In comparison to a standard piston-type hydraulic actuator, the ratio of actuator force to weight is similar, whereas the ratio of actuator force to fluid pressure is higher by several magnitudes.

It is noted that the force actuation direction F is transversal to the main pressurizing direction P in the force actuation elements 8 of all disclosed embodiments, except for the one of figure 19 showing traditional piston-type hydraulic actuators, where the force actuation direction is the same as the main pressurizing direction P.

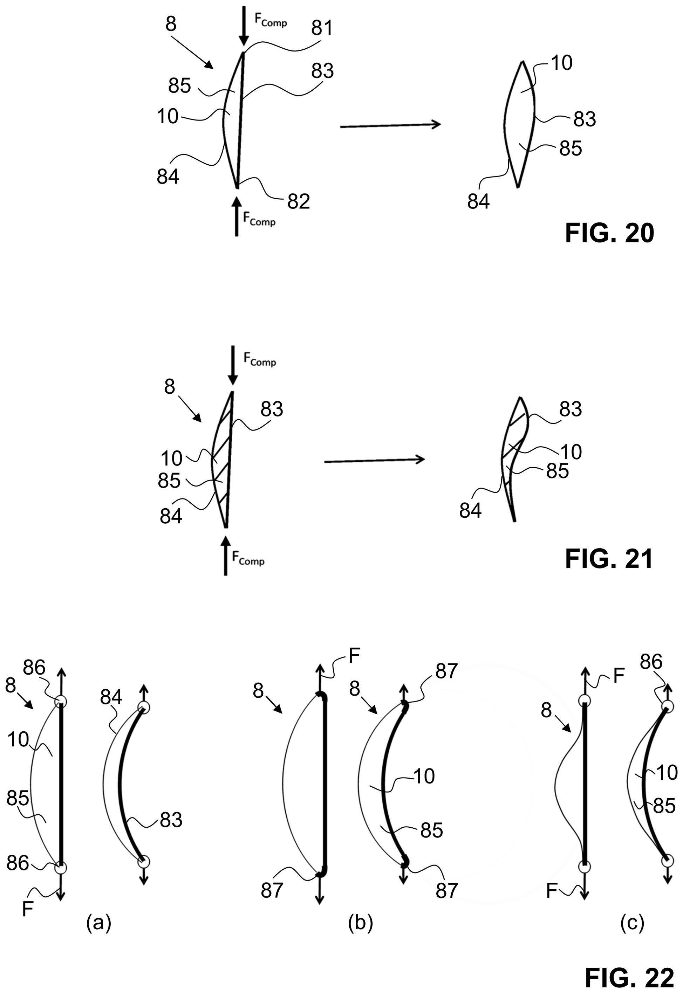

Besides actuator locking, another advantage of liquid instead of gaseous power transmission fluid 10 becomes apparent when considering load-bearing capabilities. See Figures 20 and 21 in this respect: The case of full extension and therefore straightening would be a labile state; although in this state the theoretically required pressure within the actuator would be zero, with any pressure above zero the load-bearing first sheet 83 could snap over to the other side (right side of figure 20) due do this positive gas pressure. As this would increase the enclosed volume the pressure would lower again, making this new, more rounded state a stable one and rendering the force actuation element 8 ineffective. In case of an incompressible liquid used as power transmission fluid 10 for actuation, even in its straightened, fully extended state the load-bearing first sheet 83 would not snap over to the other side as the liquid acts as a connecting element to the backstop second sheet 84, effectively maintaining the load-bearing sheet in position (right side of figure 21).

Additionally, when comparing buckling and thus load-bearing capability in the fully extended state, it becomes apparent that the use of liquid instead of gas changes the buckling mode. Whereas with a gas the load-bearing first sheet 83 would easily buckle in first mode as the volume of the enclosed inner space 85 can expand, in the liquid case the shape of the enclosed volume would be iso-volumetric. Any buckling of the load-bearing first sheet 83 would have to allow for this iso-volumetric shape change, with the result that the buckling would be at least in second mode, increasing the load-bearing capability considerably. In summary, a force actuation element 8 filled with liquid is generally more stable and load-bearing than one filled with gas, for reasons very similar to the ones when filling metal tubes with sand before bending; the properties get closer to those of a solid body rather than a tube-like structure. The two sheets 83, 84 of a CSHA-type force actuation element 8 in combination with its liquid 'core' therefore make it behave similar to a sandwich structure.

However, also second-mode/iso-volumetric buckling is reducing the load-bearing capability. It can appear even with the force actuation element 8 not fully extended (i.e. the load-bearing first sheet 83 intentionally buckled in first mode) by additionally overlapping second-order buckling. This happens particularly in low extension states where required sideways forces on the load-bearing first sheet 83 are high compared to the produced actuator force.

It can thus happen under high-load conditions that upon liquid introduction the CSHA at first introduces a second-mode buckling into the load-bearing first sheet 83, and thereafter, once the force actuation element 8 extends somewhat (i.e. reducing the sideways force required to produce the required actuator force), it switches back to first-mode buckling.

This kind of extension behavior is undesirable as it introduces sharp curvatures into the load-bearing first sheet 83, which are conducive to material damage. Hence the load-bearing first sheet 83 should be tailored to easily allow first-mode buckling, while resisting higher modes, which essentially amounts to a hinge function in its middle. This is very similar in function to the strap hinge 95 between the load-bearing front panels or plates shown in figure 14 and 15. This can be achieved by tailoring the load-bearing sheet's bending stiffness along its width. Care has to be taken that the change in bending stiffness occurs gradually, with a narrow and clearly specified minimum in the hinge area. Further, fatigue issues need to be addressed as well.

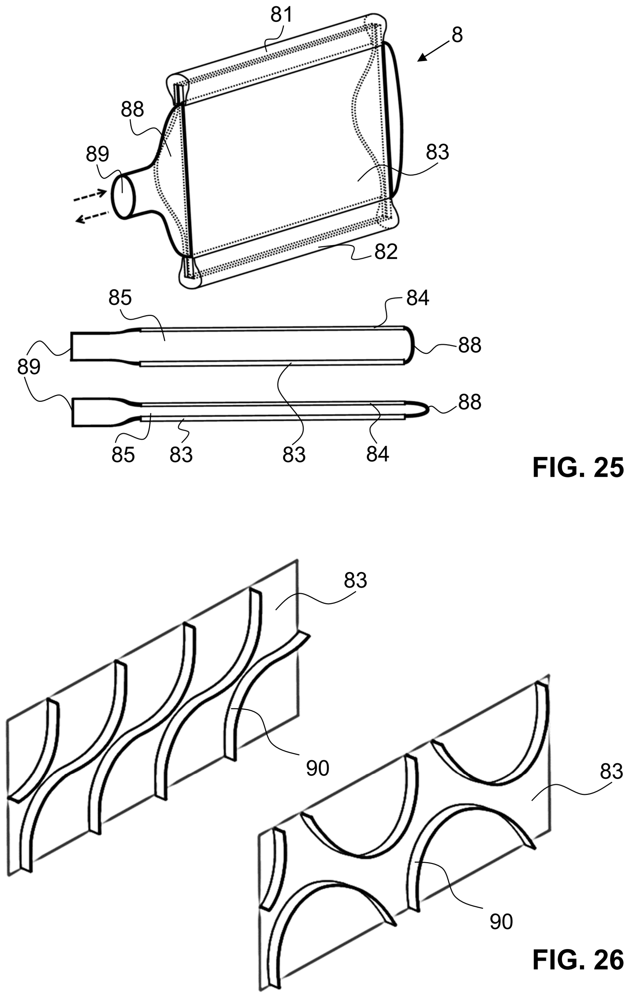

In the case of composite materials, such a hinge function of an essentially compliant element could be achieved by altering the layup along the width of the sheet, or by using a flexible matrix in the hinge area. Another option consists in geometrically altering the moment of inertia of the load-bearing sheet 83 along its width. For example, this can be achieved by adding swept ribs or fins 90 onto the load-bearing sheet 83, as shown in Figure 26; to avoid interference with the fluid cavity this is preferably added onto the concave side.

When a sheet 83 with such a hinge function is bent, the resulting first-mode buckled shape is closer to a V rather than circular. Nevertheless, this does not hinder the basic function of the CSA, as a V-shaped load-bearing sheet would still fit within the geometric casing dimensions delivering the same functions as a circular sheet.

For the expected very high internal actuation loads needed for active transport category airplane wing morphing, those line loads must be transferred from the CSHA force actuation element 8 into the actuator structure 71 and eventually the wing structure Therefore, rotational bearings 86 - also called roller bearings - are introduced in the embodiments of Figures 22 a) and c) to allow for a smooth rotational motion of both CSHA ends 81, 82 within the corners of the actuator structure 71 (which have matching negative shapes), with these essentially cylindrical bearings allowing for a high load transfer along a line. The load-bearing first sheet 83 and the backstop second sheet 84 can be introduced into such roller bearings 86 in a way that their ends point towards the bearing's rotational center. However, only the sliding contact part of the roller bearing needs to be cylindrical; the remainder can be of different shape adapted to provide for firm contact with both sheets 83, 84.

As to the specific arrangement of the load-bearing first sheet 83 and the backstop second sheet 84, several options come into question, as detailed in Figure 22. It is desirable to transfer the loads directly from the load-bearing sheets 83 to the bearings without inducing any bending moments. Option b) allows for simple production out of composite materials laying them up around a single core and stiffening the edges, in order to yield rigid bent connections 87 which are circle-shaped and thus double as rotational bearings. However, this is not ideal since the force vector along the force actuation direction F is never in line with the load-bearing sheet 83 and therefore a high bending moment exists near the bearings. Options a) and c) both use a dedicated, modified cylinder simultaneously acting as rotational bearings 86 and as receptacles for both the load-bearing first sheet 83 and the backstop second sheet 84. Option c) requires a lower volume or power transmission fluid 10, and both sheets 83, 84 can be affixed into a common slot in the cylinder, making it the preferred option.

At both ends 81, 82 of a CSA force actuation element 8, appropriate sealings need to be incorporated to a) allow for fluid removal and addition, b) contain the fluid 10 within the force actuation element 8, c) not restrict the motions of load-bearing sheet 83 and second sheet 84 to each other, and d) maintain a constant volume of fluid 10, especially in the case of the liquid-operated CSHA where the fuel volume defines the actuator's extension state. To this end, such sealings need to be flexible while avoiding a 'ballooning' effect when under pressure; this can be achieved using materials with flexible matrix and fiber-reinforcement, for example. The fluid removal and addition needs to be swift, as (particularly for the CSHA) the fluid flow directly controls the actuator operating speed. Therefore, the flight control actuation speed is directly proportional to the volume flow; since rather low pressures are expected any fluid line attachments should incorporate an appropriately large cross-section area.

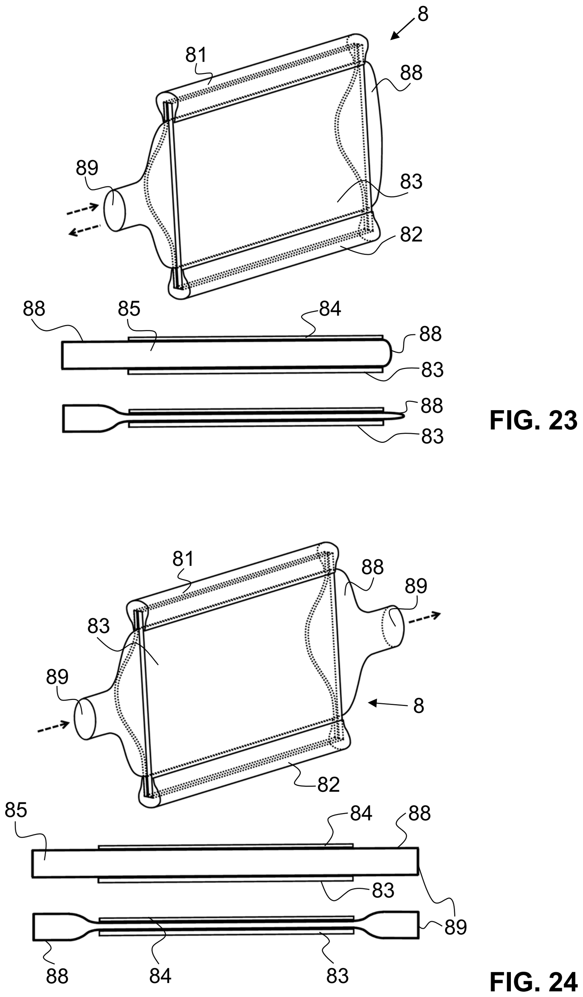

Practical embodiments of force actuation elements 8 that achieve an effective sealing of the inner space 85 are shown in Figures 23 to 25. In the simplest form of Figure 23, a simple fluid-filled pouch 88 with one pouch opening 89 can be introduced between the sheets 83 and 84, fulfilling all of these requirements. A disadvantage of this design may be the fact that some of the volume which could otherwise be used for power transmission fluid 10 is now used by the walls of the pouch 88 itself, i.e. the minimal contained volume in the fully retracted state cannot reach zero that closely. On the other hand, to avoid excessive peak forces within the actuator sheets 83, 84, a certain length difference between them (105% yields reasonable results), a minimal fluid volume would still need to be retained. The resulting minimal volume can then be filled by the pouch walls, reducing the control fluid demand accordingly and actually putting this disadvantage of a pouch running along the actuator's full length to a positive use.

The pouch version shown in Figure 23 features one attachment, i.e. any fluid control valve would need to swiftly control and meter both in- and outflow of the actuation fluid 10 through the pouch opening 89. A version with two attachments, i.e. two pouch openings 89, is shown in Figure 24, and while rendering the pouch more complex, the fluid addition and removal can be separately assigned to each attachment, making the flow effectively one-way only. This simplifies the fluid control valve design, as they are of the one-way type only, and while two such valves are needed, one is connected to the fluid feed line only, and the other to the return line, which in the case of fuel being used as fluid, could simply open into the fuel tank. Single- and dual attachment systems basically work independently of any specific pouch design.

Figure 25 shows an embodiment where, rather than using a pouch 88 running along the length of the force actuation element 8, only actual sealing caps are applied, with both sheets 83, 84 of the force actuation element 8 taking up an additional function by directly containing the fluid 10. The sealing cap connections would pose additional challenges such as gluing questions, as well as issues with general sealing and fluid permeability in the case where composite materials are used for the load-bearing sheet 83 and backstop 84.

The present invention is of course not limited on the embodiments as described and shown in the figures. A large number of modifications are possible.

**List of Reference Signs**

| | | | |
|---|---|---|---|
| 1 | Aircraft | 31 | Inboard flap |
| | | 32 | Inboard aileron |
| 2 | Fuselage | 33 | Outboard flap |
| 21 | Cutout | 34 | Outboard aileron |
| 3 | Wing | 4 | Vertical stabilizer |
| 41 | Rudder | 87 | Rigid bent connection |
| 5 | Horizontal stabilizer | 88 | Pouch |
| 51 | Elevator | 89 | Pouch opening |
| 52 | Leading edge | 90 | Fins/ribs |
| 53 | Trailing edge | | |
| 54 | Jackscrew-based actuator system | 91 | First front panel |
| | | 92 | Second front panel |
| | | 93 | First back panel |
| 6 | Continuous morphing element | 94 | Second back panel |
| | | 95 | Front strap hinge |
| | | 96 | Back strap hinge |
| 7 | Adjustment mechanism | 97 | Connecting hinge |
| 71 | Actuator structure | 98 | Inner space |
| 72 | Compartment | | |
| | | 10 | Fluid |
| 8 | Force actuation element | 11 | Airflow separations |
| 81 | First end | | |
| 82 | Second end | A | Direction of airflow |
| 83 | First sheet | F | Force actuation direction |
| 84 | Second sheet | P | Main pressurizing direction |
| 85 | Inner space | I | Isoline |
| 86 | Rotational bearing | | |

## Claims

1. A force actuation element (8), in particular for adjusting an aero- or hydrodynamic element (3, 51, 32, 34, 4, 6) of an aircraft (1) or of a watercraft, comprising
a first end (81);
a second end (82);
a first sheet (83) that connects the first end (81) and the second end (82); and
a second sheet (84) that connects the first (81) end and the second end (82);
wherein the first sheet (83) and the second sheet (84) together enclose an inner space (85) of the force actuation element (8) which is adapted to be filled with a power transmission fluid (10), such that a change in the amount and/or pressure of power transmission fluid (10) in the inner space (85) results in a movement of the first end (81) and of the second end (82) relative to each other along a force actuation direction (F),
**characterized in that**
the movement of the first end (81) and of the second end (82) relative to each other along the force actuation direction (F) is effected by a pressure of the power transmission fluid (10) on the first sheet (83) and/or the second sheet (84) along a main pressurizing direction (P) that is transverse to the force actuation direction (F).

2. The force actuation element (8) of claim 2, wherein the power transmission fluid (10) is a liquid.

3. The force actuation element (8) according to claim 1 or 2, wherein the first sheet (83) and the second sheet (84) are both continuous sheets, which together substantially completely enclose the inner space (85).

4. The force actuation element (8) according to one of the preceding claims, additionally comprising a first rotational bearing (86) that connects the first sheet (83) with the second sheet (84) at the first end (81) and/or a second rotational (86) bearing that connects the first sheet (83) with the second sheet (83) at the second end (82).

5. The force actuation element (8) according to one of the preceding claims, wherein the force actuation element (8) is crescent-shaped, such that the pressure of the power transmission fluid (10) acts onto a concave area of the second sheet (84) and on a convex side of the first sheet (83).

6. An aircraft (1) comprising
an aerodynamic element (3, 51, 32, 34, 4, 5, 6), in particular a wing (3), a combined stabilizer and elevator (6), an elevator (51), an aileron (32, 34) or a stabilizer (4, 5); and
at least one force actuation element (8) according to one of the preceding claims that serves to adjust the aerodynamic element (3, 51, 32, 34, 4, 5, 6).

7. The aircraft (1) of claim 6, wherein the at least one force actuation element (8) is filled with the fuel of the aircraft (1), in order to use the fuel as the power transmission fluid (10).

8. The aircraft (1) of claim 6 or 7 additionally comprising an adjustment mechanism (7) for actively adjusting the aerodynamic element (6), in order to control the pitch of the aircraft (1), the adjustment mechanism (7) having the at least one force actuation element (8);
wherein the adjustment mechanism (7) is adapted to control the pitch of the aircraft (1) by means of a continuous deformation of the aerodynamic element (6).

9. The aircraft (1) of claim 8, wherein the adjustment mechanism (7) is adapted to control the pitch of the aircraft (1) by means of a continuous deformation of the entire aerodynamic element (6), and wherein the aerodynamic element (6) is a wing, a combined stabilizer and elevator, or a stabilizer.

10. The aircraft (2) according to claim 8 or 9, wherein the adjustment mechanism (7) comprises a plurality of such force actuation elements (8), which are arranged in rows and/or columns, and wherein the adjustment mechanism (7) preferably comprises an actuator structure (71) with compartments (72) for receiving one force actuation element (8) each.

11. The aircraft (2) according to one of claims 8 to 10, wherein the adjustment mechanism (7) comprises at least a first and a second of such force actuation elements (8), and wherein the adjustment mechanism (7) is adapted to increase the amount and/or pressure of power transmission fluid (10) in the inner space (85) of the first force actuation element (8) and at the same time decrease the amount and/or pressure of power transmission fluid (10) in the inner space (85) of the second force actuation element (8), in order to adjust the aerodynamic element (6) by means of both the first and the second force actuation element (8).

12. A method for adjusting an aero- or hydrodynamic element (3, 51, 32, 34, 4, 5, 6) of an aircraft (1) or of a watercraft, in particular by means of the force actuation element (8) according to one of claims 1 to 5, the method comprising at least the step of changing the amount and/or pressure of a fluid transmission fluid (10) in an inner space (85) that is enclosed by a first sheet (83) and a second sheet (84), in order to effect a pressure on the first sheet (83) and/or the second sheet (84) along a main pressurizing direction (P) and thereby move a first end (81) and a second end (82), which are connected to each other by the first sheet (83) and by the second sheet (84), relative to each other along a force actuation direction (F) that is transverse to the main pressurizing direction (P), in order to adjust the aero- or hydrodynamic element (3, 51, 32, 34, 4, 5, 6).

13. The method according to claim 12, wherein the pressure of the power transmission fluid (10) acts onto a concave area of the second sheet (84) and on a convex side of the first sheet (83), when the amount and/or pressure of the fluid transmission fluid (10) in the inner space (85) is changed.
